# EUROPEAN PATENT SPECIFICATION

(11) **EP 2 098 835 B1**
(45) Date of publication and mention of the grant of the patent: **28.09.2011**
(21) Application number: 09154404.9
(22) Date of filing: 05.03.2009
(51) Int. Cl.: G01F 15/00, G01F 15/12, G01F 15/18, E03B 7/07

(54) **Device for treating a liquid flow for appliances and systems supplied with said liquid, particularly appliances and systems for room heating or air conditioning and household appliances**
Vorrichtung zur Behandlung eines Flüssigkeitsstroms für Anwendungen und Systeme mit besagter Flüssigkeit, insbesondere Anwendungen und Systeme für Raumheizung oder Klima- und Haushaltsanwendungen
Dispositif pour traiter un flux liquide pour appareils et systèmes pour ledit liquide, en particulier appareils et systèmes pour chauffage de pièce ou climatisation et appareils ménagers

(30) Priority: 07.03.2008 IT TO20080177
(43) Date of publication of application: 09.09.2009
(73) Proprietor: Eltek S.p.A., 15033 Casale Monferrato (AL) (IT)
(72) Inventor: Savini, Paolo, 15033 Casale Monferrato (AL) (IT); De Vido, Pier Angelo, 15033 Casale Monferrato (AL) (IT); Gadini, Costanzo, 15033 Casale Monferrato (AL) (IT)
(74) Representative: Gallarotti, Franco

(56) References cited:
- EP-A1- 1 782 875
- WO-A1-00/50793
- DE-A1- 4 400 582
- GB-A- 2 259 775
- US-A1- 2006 283 013

## Description

The present invention refers to a device for treating a liquid flow, for appliances and systems supplied with said liquid. The invention has been developed with particular attention being paid to a device of the abovementioned type for use in combination with heating appliances or systems (for example boilers), room conditioning systems (for example air conditioners) or water-sanitary systems (for example water heaters). The device subject of the invention finds advantageous application also in combination with household appliances (for example washing machines). In the applications mentioned above the liquid in question is typically represented by water or a water-based mixture, for example a mixture of water and an antifreeze agent.

Devices of the mentioned type typically have a body that defines a chamber having an inlet opening for a flow of the liquid to be treated and an outlet opening for the flow of the treated liquid. Accommodated in the chamber are treatment means, in an intermediate position between the inlet and the outlet, which typically comprise a filter, for retaining the particles in suspension in the water. Also accommodated in the chamber, downstream of the filter, is a flow regulator, operating to determine the water flow rate allowed at the outlet of the device. Furthermore, the device is provided with a removable cap or plug, so as to allow access to the abovementioned chamber, to perform possible maintenance and/or replacement operations of the treatment means, typically replacement of the filter or periodical cleaning of the same.

A device of this type is known from EP-A-1 782 875, on which the preamble of claim 1 is based.

GB-A-2259775 discloses a water metering unit comprising a base member which includes a connecting portion adapted for connection into a water supply pipe, a housing portion capable of housing a water metering means. The connection portion has an inlet and outlet through which water from the supply pipe can be directed into and away from the housing portion, a ball valve 13 being positioned in the inlet. The unit further includes an insert member capable of removable insertion into the housing portion of the base member, the insert member containing water flow metering means for measuring a volume of water passing through the meter means and an inlet and outlet.

WO 00/50793 discloses a cutoff valve assembly for coupling between a water meter and a water supply line, which includes a valve body and a valve cartridge which is slidably insertable in the body. In an embodiment, the body includes a socket for receipt of a filter cartridge.

DE-A-4400582 discloses a water filter assembly having a flow meter acting with a shut-off unit for the water. The water flow is stopped on exceeding a given water volume.

The present invention has the aim of providing a device of the type indicated at the beginning which, though being easy and inexpensive to produce, is more versatile to use, accurate and reliable with respect to the devices of the prior art.

This and other aims, which shall be apparent hereinafter, are attained according to the present invention by a device for treating a liquid flow for appliances and systems supplied with said liquid, particularly household appliances, heating appliances or systems or room conditioning appliances or sanitary appliances or systems, having the characteristics of the attached claims. The claims form an integral part of the technical teaching provided herein according to the invention.

The specific aims, characteristics and advantages of the invention shall be apparent from the following detailed description, provided with reference to the attached drawings, strictly provided for exemplifying and non-limiting purposes, wherein:
- figure 1 is a perspective schematic view of a treatment device made according to a first embodiment of the present invention;
- figure 2 is a sectioned perspective view of the device of figure 1;
- figure 3 is an exploded view of the device of figure 1;
- figure 4 is a perspective view of a main body of the device of figure 1;
- figures 5 and 6 are perspective views, from different angles, of two components of the device of figure 1;
- figures 7 and 8 are exploded views, from different angles, of a further component of the device of figure 1;
- figures 9 and 10 are sectioned perspective views of the device of figure 1, in two different operative or adjusting conditions;
- figure 11 is an exploded view of a treatment device made according to a second embodiment of the invention;
- figure 12 is a plan view of a main body of the device of figure 11;
- figure 13 is a perspective view of a component of the device of figure 11;
- figures 14 and 15 are two perspective views of the component of figure 13, in two different positions or operative conditions;
- figures 16 and 17 are sectioned perspective views of a treatment device made according to a third embodiment of the invention, in assembled condition and in two different operative or adjusting conditions;
- figure 18 is a perspective view of two components of a treatment device made according to a fourth embodiment of the invention;
- figure 19 is a perspective view of two components of a treatment device made according to a fifth embodiment of the invention;
- figure 20 is a perspective view of two components of a treatment device made according to a sixth embodiment of the invention;
- figure 21 is a sectioned perspective view of a further application example of a treatment device according to the invention;
- figure 22 is a partial and sectioned perspective view of a further variant embodiment of the invention.

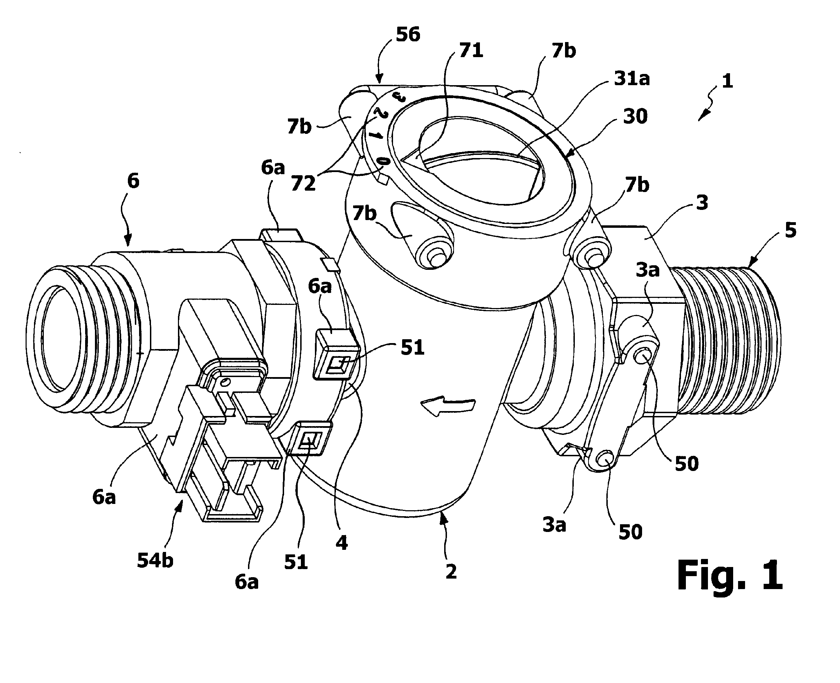

In figure 1, a treatment device according to the present invention is indicated with 1 as a whole. The device 1 has a main body 2, for example made of moulded thermoplastic material, with an inlet fitting 3 and an outlet fitting 4, being internally hollow.

In the shown example, sealingly coupled to the fitting 3 is a first hollow auxiliary body 5, for example consisting of a threaded insert, preferably made using a material (such as a metal material) suitable to bear high mechanical stresses imparted through tools, used for connecting the device 1 to a line or an appliance for supplying a water flow or water-based flow, not represented. Hereinafter, the liquid in question shall be presumed to be water.

In the illustrated non-limiting example, sealingly connected to the fitting 4 is a second hollow auxiliary body 6, for accommodating a flow measuring device described hereinafter.

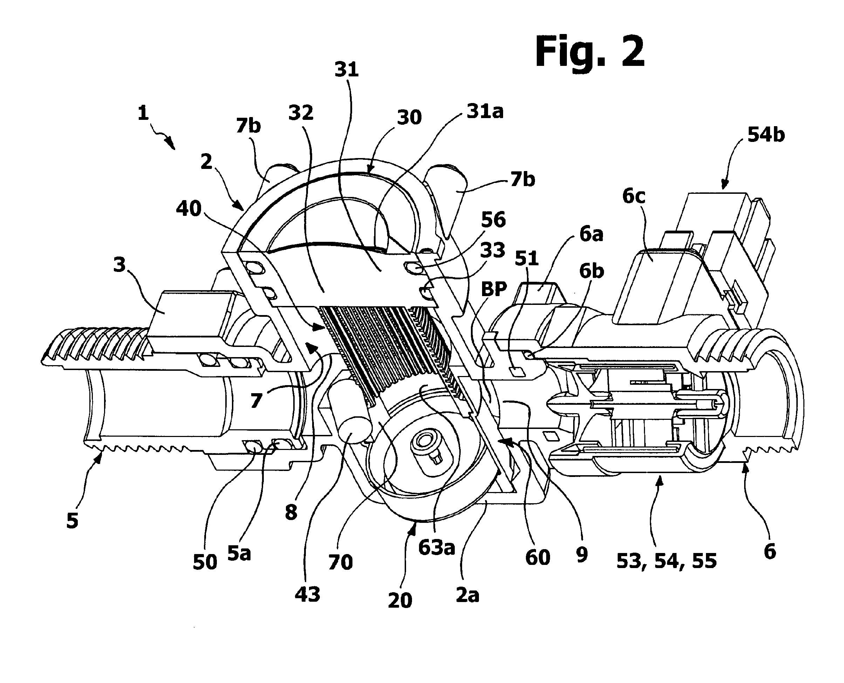

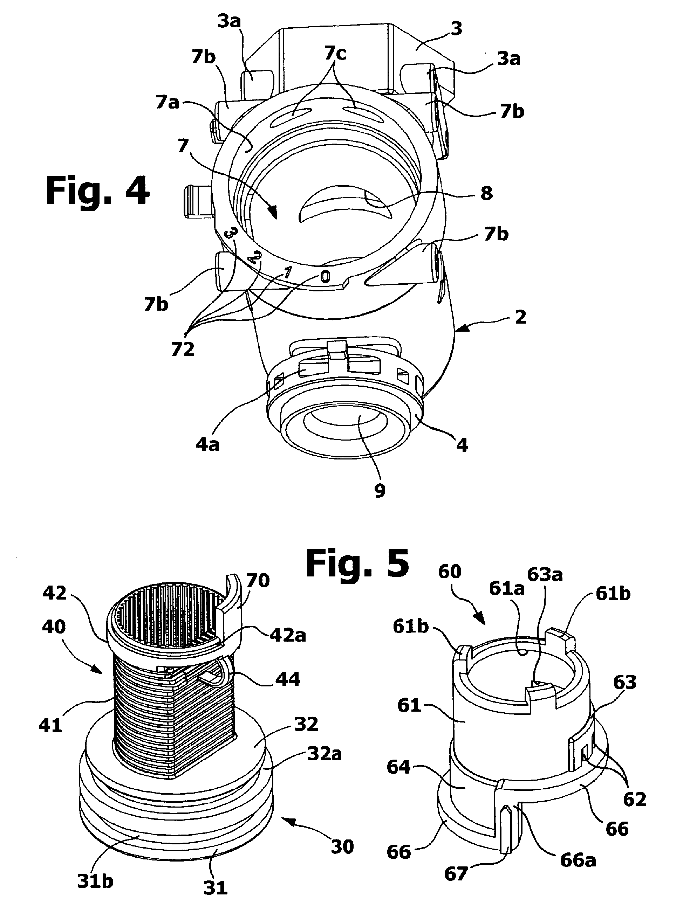

Referring also to figures 2-4, the body 1 defines a cavity or chamber 7, extended axially, having an inlet 8 and an outlet 9 in fluid communication with the axial passages of the fittings 3 and 4, respectively; as can be seen in figure 4, in the exemplified example, the chamber 7 has a substantially circular cross-section and the inlet 8 has a partially semi-circular cross-section.

Housed in the chamber 7 are means for conditioning one or more characteristics of the inflowing water flow, among which at least one chemical/physical characteristic of the water and at least one fluid-dynamic characteristic. In the preferred embodiment of the invention, the conditioning means comprise at least one treatment member, operative to purify water, and a flow or flow-rate regulator. In the illustrated example, the treatment or purification member is represented by a filter, intended to retain generic particles in suspension in the water, indicated with 40 as a whole, which is housed in the chamber 7 upstream - with reference to the fluid flow - of the flow regulator, the latter being indicated with 20 as a whole. As observable clearer hereinafter, according to the invention the regulator 20 determines, or contributes to determine, depending on the use conditions of the device 1, the water flow-rate allowed at the outlet 9 of the chamber 7.

The chamber 7 is closed at a first end thereof, for example the lower end with respect to the figures, by a respective wall 2a (figure 2); at the end opposite to said first end, for example the upper end with respect to the figures, the chamber 7 is open, with the body 2 which defines, for such purpose, an end access mouth, indicated with 7a in figure 4, having a circular cross-section. Received in this mouth 7a is a cap or plug, indicated with 30 as a whole in the figures.

In the example, the inlet and outlet 8 and 9 are lateral with respect to the chamber 7, i.e. they are defined in a wall of the body 2 which peripherally delimits the chamber 7; in other embodiments, orientations of the components and of the inlet and outlet pipes different from the exemplified ones are possible: for example, the outlet 9, instead of being lateral, may be defined in the body 2 in the opposite position with respect to the mouth 7a.

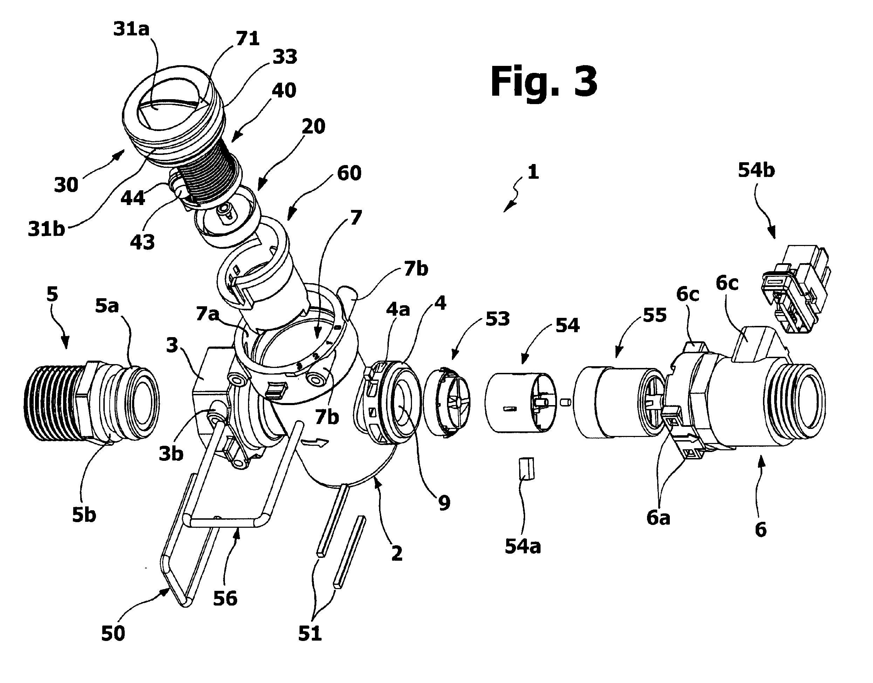

In the illustrated example the insert 5, which is provided with at least one sealing gasket 5a (figures 2 and 3), is blocked in the fitting 3 by means of a stop element, indicated with 50, consisting in a substantially U-shaped fork. The two parallel arms of this fork 50, in this case having a circular cross-section, are intended to be fitted into respective pairs of hollow seats 3a, made in the body 2 at the fitting 3. According to a per se known technique, when the two arms of the element 50 are fitted into the seats 3a, an intermediate section of each arm intersects the axial passage of the fitting 3, thus engaging into a throat or annular seat obtained in the body of the insert 5, constraining the body 2 and the insert to each other, though allowing a relative rotation therebetween: this throat is indicated with 5b in figure 3 and the engagement condition between the parallel arms of the element 50 and such throat can be seen for example in figure 2. Obtained in a substantially similar manner is the sealing blocking of the auxiliary body 6 against the fitting 4; in this case, instead of a fork-shaped single stop element, two distinct stop elements or pins are provided for, indicated with 51, each intended to be fitted into a respective pair of passages 4a (figure 4) made in the body 2 at the fitting 4; furthermore, for this purpose, the auxiliary body 6 is provided with pairs of hollow seats 6a: when the two pins 51 are fitted into the seats 6a of the body 6, an intermediate section of each pin 51 passes through in the related passage 4a, thus constraining the bodies 2 and 6 to each other, but without possibility of the relative rotation; also in this case, conveniently provided for between body 6 and body 2 is at least one sealing gasket, indicated with 6b in figure 2. Obviously, there are alternative methods, for fixing the insert 5 and the body 6 to the body of the device according to the invention, according to any known technique suitable for the purpose.

The auxiliary body 6 is axially hollow and internally houses part of a flow and/or flow-rate measuring device. Connected downstream of the body 6 is a user appliance, for example a boiler for a heating and hot sanitary water generating system. Preferably, the abovementioned measuring device is of the impeller type, for example with an impeller that rotates according to an axis coaxial or parallel to the axis of the passage of the body 6, and hence substantially axial to the flow subjected to measurement; the flow measuring device may also be of any other type suitable for the purpose, such as for example a measuring device with a tangential impeller (that is with a rotational axis perpendicular to that of the pipe), or of the hot-wire or hot-film type. As will be clear, at least part of the abovementioned measuring device (for example its component indicated hereinafter with 55) is adapted to be accommodated within the auxiliary body 6 or in the body 2 of the device 1, or in a hydraulic conduit defined by one of such bodies.

In the illustrated example, the measuring device comprises a diffuser 53, intended to direct the flow towards the blades of an impeller 54 provided with excitation means 54a (for example a magnetic insert), and a casing body or jacket 55; the diffuser 53 and the jacket 55 are configured to be coupled, for example in a snap-coupling manner, with the impeller 54 being interposed, supporting it in a rotating manner. Defined outside the auxiliary body 6, substantially in alignment with the operative position of the excitation means 54a of the impeller 54, is a seat or engagement 6c for positioning and/or fixing a detector means 54b, for example a magnetic sensor, preferably provided with an electrical connector. The flow measuring device is not described further, given that the same is attainable according to known technique, and particularly according to the teachings of EP-A-0599341 or WO 03/106323, considered incorporated herein.

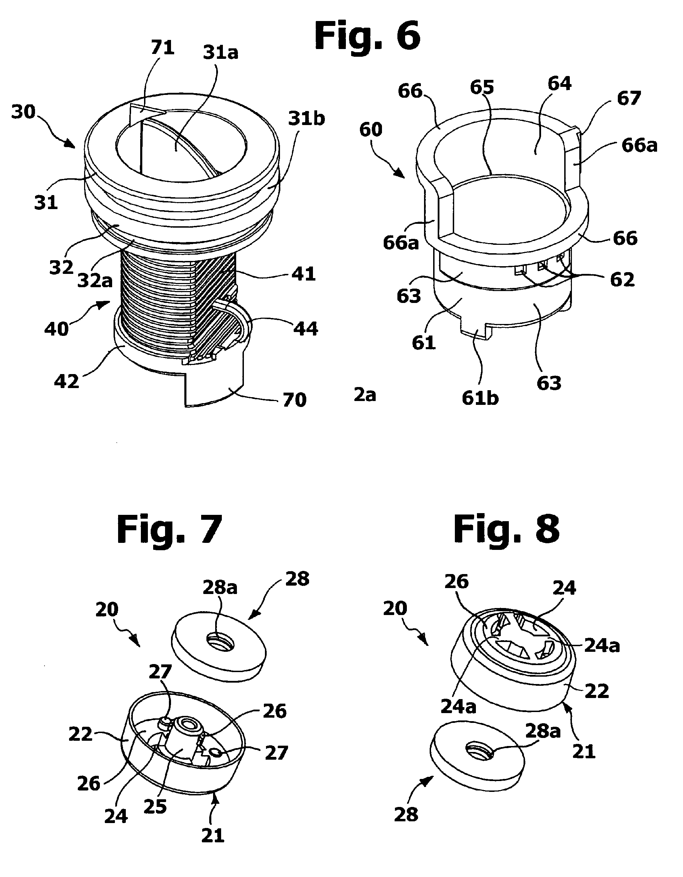

Also with reference to figures 5 and 6, the cap 30 has a respective body adapted to be moved by a user of the device 1. In the illustrated example, the body of the cap 30 has an upper portion, indicated with 31 in figure 2, which is accessible, or graspable or anyway directly or indirectly operable by a user. In the shown example this upper portion 31 is substantially cylindrical-shaped and centrally comprises a blind cavity, provided with a separation wall or grip element 31 a, susceptible to be grasped by the user by means of the fingers; in a possible variant, the upper portion of the cap 30 may, instead, comprise a seat, for example a diametral cavity, for receiving the head of a tool, such as a screwdriver, so as to impart to the cap itself a movement or rotation, for the purposes clarified hereinafter.

The body of the cap 30 has, beneath and in proximity to the abovementioned operable part 31, a sealing portion, indicated with 32, also being substantially cylindrical-shaped and provided with a throat or annular seat for a sealing gasket; the abovementioned throat is indicated with 32a in figures 5 and 6, while the gasket, in particular of the o-ring type, is indicated with 33 in figure 2; in a possible embodiment the gasket 33 is made of elastic material moulded on, or with, at least part of the cap 30, 32 and/or in a special seat 32a.

As observable in figure 2, in the operative condition of the device 1, the portions 31 and 32 of the cap 30 are found at the upper mouth 7a (figure 4) of the chamber 7, with the gasket 33 exerting the necessary watertight sealing on the surface of the body 2 defining the mouth.

In the device according to the invention, the body 2 and the cap 30 have means for mutual coupling to maintain, in at least one engagement condition thereof, the cap in a sealing closure position of the mouth 7a, such coupling means being further adapted to a attain a release condition, in which the cap 30 is removable from the mouth 7a.

In the first embodiment, the cap 30 is constrained at the mouth 7a in such a manner to be rotated around its own axis, however without such angular movement determining or allowing the extraction of the cap itself from the mouth 7a, or maintaining a sealing closure. For such purpose, in the illustrated example, the means for mutual coupling between the cap 30 and the body 2 are substantially similar to the ones provided for constraining the insert 5 to the fitting 3, substantially of the quick-coupling type. Thus, provided for in the example is a fork-shaped stop element 56, whose two parallel arms, having a circular cross-section in this case, are intended to be fitted into respective pairs of hollow seats 7b, obtained in the body 2 in the region of the upper mouth 7a of the chamber 7. When the two arms of the fork 56 are fitted into the seats 7b, an intermediate section of each arm intersects the axial passage in the region of the mouth 7a, thus engaging into a throat or annular seat obtained in the upper portion 31 of the body of the cap 30: this throat is indicated with 31b in figures 5 and 6 and the engagement condition between the parallel arms of the fork 56 and such throat can be seen in figure 2; further visible in figure 4, indicated with 7c, are the opposite ends of the two seats 7b - axially aligned to each other - of one of the two pairs, such ends opening on the cylindrical wall which defines the mouth 7a: extended between such two seat ends 7c is the abovementioned intermediate section of a respective arm of the fork 56, which is engaged into the throat 31 b of the cap 30. Obviously, alternative means for constraining the cap 30 into the mouth 7a are possible in such a manner to allow, in any case, the rotation or movement thereof, like for example described hereinafter; furthermore the fork 56 may be replaced by two stop elements of the type indicated previously with 51, which however preferably have a circular section.

In the embodiment exemplified in figures 1-9, the filter is configured in a single piece with the cap 30. For such purpose, as observable particularly in figures 5 and 6, the body of the cap has a tubular portion hollow and open at the lower part (i.e. on the opposite part with respect to the portions 31 and 32), indicated with 41, essentially made up of a sieve wall, provided with a plurality of holes or passages, adapted to filter water.

In the example, this portion does not have a completely circular portion, having a flat part, clearly observable in figures 5 and 6. In the preferred embodiment, the body of the cap 30 further comprises, at the lower end of the sieve wall 41, an annular portion 42, preferably whole or solid (i.e. not drilled), whose lower face is configured to be coupled with a further component of the device 1, described hereinafter; in the example, such lower face defines a step, indicated with 42a in figure 5. The single component that provides the cap 30 - filter 40 assembly may be conveniently obtained, through a technique known per se, by moulding thermoplastic material; the component at issue may be obtained by means of a single moulding operation, or obtained by moulding at least one first part and subsequent moulding of at least one second part onto the first part. In another embodiment, the cap and the filter can be obtained one distinctly from the other and then operatively connected or made integral to each other.

In the illustrated embodiment the conditioning means comprise, alongside the filter 40, a further treatment member, operative to retain possible ferrous or ferromagnetic particles or particles brought in suspension by the water, also having smaller dimensions with respect to the section of the holes or meshes of the sieve wall 41. This further treatment member, or magnetic filter, is represented by a magnetic element or permanent magnet, indicated with 43 as a whole in figures 2 and 3. In the example, this magnetic element 43 is associated to the body of the cap - filter assembly, and specifically the portion defining the filter 40 thereof. As observable in figures 3, 5 and 6, obtained for such purpose in the body of the assembly 30, 40 is a seat, in this case obtained from a sort of collar 44, extending between the flat part of the wall of the sieve wall 41 and the lower annular portion 42, in such a manner to bind and maintain the magnetic element 43 in position, the latter being substantially cylindrical-shaped in this case. Obviously, there are other possible shapes for the magnetic element 43 and for the means used to constrain it to the filter 40 or to the cap 30, also configured as distinct pieces with respect to the body of the cap or of the filter. In the device 1, as illustrated in the figures, element 43 is an optional component (but in other applications it may represent a purification element alternative to the sieve filter).

Still with particular reference to figures 5 and 6, indicated with 60 is an axially hollow body, herein defined as positioning body, generally tubular-shaped, open at both ends.

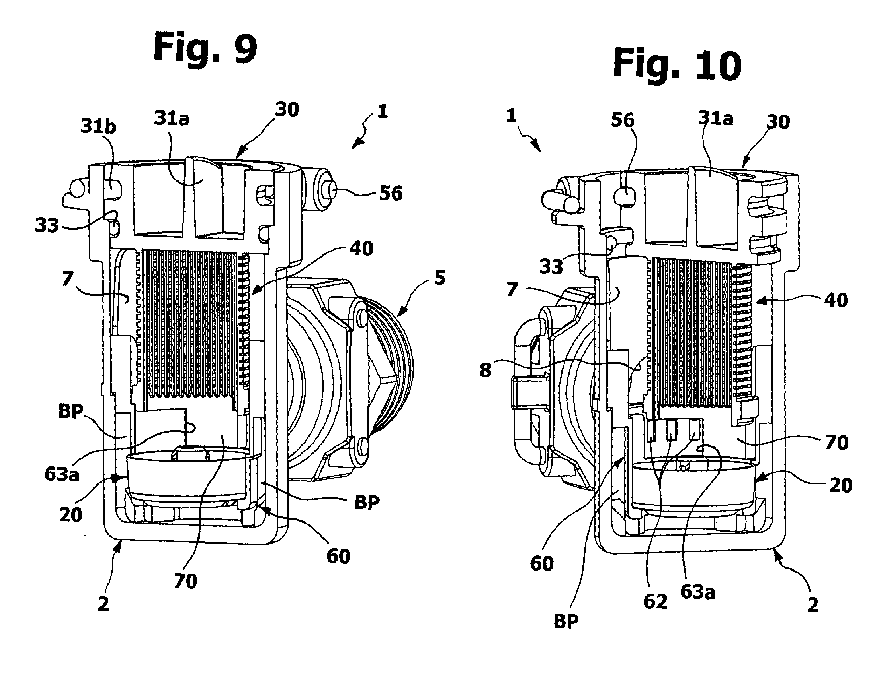

The positioning body 60 has a substantially cylindrical lower portion 61, at the lower end thereof is an annular rim, projecting inwards the body itself to define an abutment or rest seat or surface 61a; further provided for at the lower end of the portion 61 are spacers or support feet 61b. Provided for in the peripheral part of the portion 61 are three ports, configured as through holes 62 of the wall itself; these holes 62 are made at a seat 63 made slightly projecting outwards in the cylindrical wall of the portion 61. This seat 63 is substantially circle-arc-shaped and defines a cavity open towards the inside of the body 60 and upwards: this cavity is partially observable in figure 5 (as well as in figure 10), where it is indicated with 63a. The body 60 then has an upper portion 64, substantially semi-cylindrical-shaped in this case; this upper semi-cylindrical portion 64 is extended upwards starting from the lower portion 61, on the part of the latter opposite to that where the holes 62 are made.

As observable in figures 5 and 6, portion 64 has a greater diameter than portion 61 and defined between the two portions is a step, indicated with 65 in figure 6, which extends up to the two longitudinal ends of the cavity 63a; the width of this step 65 is substantially equivalent to the depth of the seat 63a, and the latter is upwardly open. The body 60 has an upper edge 66, which in the example is configured as a cantilever wall or projecting outwards: a half of this edge is substantially made at the upper end of the portion 64 and the other half is instead made at the upper end of the part of the portion 61 not involved by the portion 64; these two halves of the edge 66 are joined to each other by means of two vertical edge sections 66a, i.e. which extend in the axial direction of the body 60. Provided for on at least one of these edge sections or joint 66a is a polarization element, in form of an axial protrusion 67 in this case, whose function shall be clarified hereinafter.

As clearly observable hereinafter, according to the invention, the device 1 is provided with means, operable by a user, to selectively predefine or adjust the flow-rate of the water allowed at the outlet 9; these means comprise an adjusting element which is selectively displaceable among a plurality of alternative adjusting positions.

In the exemplified embodiment, this adjusting element, indicated with 70 in figures 5 and 6, is provided for at the lower end of the filter 40. In this embodiment the adjusting element 70 is made integral with the body of the cap - filter assembly and it is configured as a small wall or projection projecting downwards starting from the end annular portion 42 of the filter 40, particularly with the aim of providing an element for plugging the holes 62. As observable in the figures, the appendage or projection that forms the adjusting element 70 has a substantially circle-arc-shaped transverse section. It should be observed that the element 70 may also be configured as a distinct part associated to the body of the filter 40.

Illustrated in figures 7 and 8, in different views, is the flow regulator 20, forming a conditioning means of a fluid-dynamic characteristic of the water flow. The flow regulator 20 has a generally known configuration and comprises a regulator body 21, substantially cup-shaped, made for example of thermoplastic material, having a cylindrical peripheral wall 22 and a bottom wall 23. The bottom wall 23 is provided with an opening 24, having one or more crosspieces 24a which centrally support a pin 25, provided in its upper region with engagement teeth, one of which is indicated with 26. Rising from the surface of the wall 23 that is circumscribed by the peripheral wall 22 are some protrusions, two of which are indicated with 27, arranged around the opening 24. The regulator 20 further comprises a restrictor element, which in the example is represented by a membrane 28 made of elastic or resilient material, such as an elastomer. In this example, this membrane 28 is disc-shaped and has a central hole 28a. The pin 25 is inserted into the hole 28a, until it exceeds the teeth 26, and thus obtaining the position engagement of the membrane 28. The lower portion of the pin 25 preferably has a widening, defining an abutment surface for the membrane 28, which is at a greater height with respect to the top faces of the protrusions 27: thus, with the regulator 20 assembled, the lower surface of the membrane 28 is at a given distance with respect to the tops of the protrusions 27, which can be of different heights with respect to each other.

In the normal operation of a regulator of the represented type, the water flow impacts upon the upper surface of the membrane 28 and, depending on the water flow-rate, or the force in the dynamic conditions of the water, deforms the membrane itself to a greater or smaller extent, in the sense of nearing the lower surface of the membrane 28 to the top of the protrusions 27 by a smaller or greater extent.

In practice, in this manner the passage section of the regulator, defined between the membrane 28, the underlying opening 24 and the protrusions 27, is varied, depending on the liquid flow-rate, in such a manner to regulate the flow-rate and maintain the rate itself substantially constant. Obviously this functionality is obtained by suitably dimensioning and positioning the various active parts of the regulator (membrane, opening, protrusions, etc) in the design step, through methods per se well known in the field.

At least the treatment means represented by the filter 40 and/or by the magnetic element 43 are inserted in a removable manner into the chamber 7, for possible cleaning and/or periodical replacement thereof. As deducible, for such purpose, it is enough to slip the fork 56 off the relative seats 7b and then extract the cap 30, by holding it in its accessible part 31. The removal of the cap 30 - filter 40 assembly also allows access to the positioning body 60 and to the flow regulator 20, for the possible cleaning and replacement of the latter.

The assembled condition of the device 1 according to the invention is observable for example in figures 1 and 2. The assembled flow regulator 20 is inserted into the positioning body 60, and specifically into its lower portion 61, until the bottom wall 23 of the regulator body 21 (figure 7 and 8) abuts against the support surface 61a (figure 5). The peripheral wall 22 of the regulator body 21 is relatively thin, and thus slightly deformable, to allow fitting the regulator 20 with interference into the portion 61, whose diameter is substantially equivalent or slightly smaller than that of the wall 22; this interference per se avoids the risk of water leaking between the external surface of the wall 22 and the internal surface of the portion 61; in any case, between the two parts in question a gasket might possibly be provided for.

The positioning body 60 is thus inserted into the chamber 7, through its upper mouth 7a, until the feet 61b res on the lower wall 2a of the chamber 7 . As mentioned, the positioning body 60 is provided in the external part thereof with an axial protrusion 67 (figure 5): this protrusion is intended to be inserted into a respective groove or axial seat - not shown in the figures - obtained on the wall defining the chamber 7, with the aim of "polarizing" the body 60, i.e. impose a univocal positioning of the body 60 into the chamber itself, and prevent unwanted rotations of the body 60 in the chamber 7 during the normal use of the device 1.

Furthermore, in order to obtain this coupling, the assembly is inserted into the chamber 7 such that the adjusting projection 70 is inserted - from above - into the cavity 63a of the seat 63, formed in the cylindrical wall of the lower portion 61 of the body 60 (see for example figures 9 and 10). The seat 63, and thus its cavity 63a, is circle-arc-shaped and it also open upwards, so as to be able to receive the projection 70; furthermore, as said, the adjusting projection 70 is configured as a small wall with a circle-arc-shaped section: it should thus be specified that the angular development of the projection 70 in transverse section is smaller with respect to that of the cavity 63a of the seat 63: in such manner, as observable, by imparting a rotation to the cap - filter assembly, the projection 70 may be moved within the cavity 63a of the seat 63. Preferably, at least part of the adjusting projection 70 and of the seat 63 form between them a respective coupling with appropriate liquid sealing, through allowing a relative movement; for such purpose, the projection and/or the seat may be possibly provided also with sealing means, such as one or more gaskets, not shown.

As observable in figure 2, the sealing part 32 of the cap 30 is inserted into the mouth 7a, with the gasket 33 carrying out the required sealing with respect to the wall of the body 2 defining the mouth. The upper part 31 of the cap 30 is exposed or accessible to the outside of the body 2 in a substantial manner, as clearly observable in figures 1 and 2, so as to be operated. The cap 30 is constrained in the closure sealing position of the mouth 7a through the fork 56, in the above described ways. In the assembled condition, the constraint means represented by the fork 56, by the seats 7b and by the circumferential throat 31b of the upper part of the cap 30 allow the movement or rotation of the cap itself with respect to the mouth 7a and to the body 2, but without allowing its removal (obtainable only by extracting the fork from the seats 7b).

In the assembled condition, the peripheral surface of the cantilever edge 66 of the body 60 is at contact with the wall defining the chamber 7, or with internal walls of the body 2, preferably with slight interference between the relative opposite surfaces. Given the presence of the cantilever edge 66 (or of possible sealing means additionally or alternatively provided for at the edge 66), defined between the outer surface of the body 60 and part of the surface of the body 2 defining the chamber 7 an interstice or interspace is defined, indicated with BP only in figures 2, 9 and 10. The univocal positioning determined by the protrusion 67 and by the corresponding seat is such that the body 60 is in the fixed operating position shown in figures 2, 7 and 8: in such a position, the semi-cylindrical wall of the upper portion 64 of the body 60 (figure 6) is substantially opposite to the outlet 9 of the chamber 7, with the interspace BP that is thus in communication with the same outlet; the part of the edge 66 relating to the abovementioned portion 64 extends above the opening 9. On the other side, the lower portion 61 and the respective part of the edge 66 are at a lower height with respect to the inlet 8 of the chamber 7. The configuration is such that the body 60 is interposed between the inlet 8 and the outlet 9, in such a manner to force the liquid flow to across the body 60.

As observable hereinafter, in the first embodiment, the flow regulator 20, the projection 70 and the seat 63 with the holes 62 are part of flow-rate adjustment means, prearranged for selectively acquiring two or more alternative or predefined configurations.

The fact that the adjusting projection 70 is operatively inserted into the cavity 63a of the seat 63 of the body 60 has the effect of limiting the rotation movement that may be imparted to the cap - filter assembly, between two extreme positions. In both of these positions (represented in figures 9 and 10), as well as in the intermediate positions, at the inlet 8 of the chamber 7 the flat part of the sieve wall 41 of the filter 40 still remains substantially opposite - though with different angles of inclination - to the magnetic element 43.

The general operation of the device 1 is as follows.

The water flow to be conditioned reaches, through the insert 5 and the fitting 3, the inlet 8 of the chamber 7. Facing the inlet 8 are the sieve wall 41 of the filter 40, and specifically the flat part thereof, and the magnetic element 43. Possible ferrous or ferromagnetic particles present in the water are attracted and retained by the magnetic element 43, with the flow impacting the sieve wall 41 and penetrating into the filter 40; the transverse section of the sieve wall 41 is smaller with respect to the diameter of the chamber 7 (i.e. there is a cavity around at least one part of the filter 40), as observable for example in figure 2, such that water can entirely impact the sieve wall 41, also in the part opposite the inlet 8. As mentioned, the edge 66 of the positioning body 60, whose outer surface is preferably lying with slight interference against the circumferential surface of the chamber 7, serves as a sealing element, preventing the water flowing into the chamber 7 from directly penetrating into the interspace BP. Obviously, for such purpose, at least one additional sealing means, such as a gasket may be also provided for between the body 60 and the wall defining the chamber 7.

Therefore, the entire water flow passes through the sieve wall 41, reaching the internal part of the filter 40; the solid particles possibly present in the water are retained outside the sieve wall 41 (obviously for the particles of greater dimension with respect to the holes or meshes of the sieve wall 41). The water flow may thus penetrate the lower part 61 of the positioning body 60 and reach the flow regulator 20.

It should be observed that the adjusting projection 70 and the seat 63 are dimensioned such that the opposite curved surfaces of the projection and of the seat are at contact with each other, i.e. with the surface of the projection 70 leaning against the bottom of the seat 63 in which the holes 62 are formed; furthermore, preferably, the elements at issue are also dimensioned such that the projection 70 elastically presses against the bottom of the seat 63: this allows obtaining a sealing sufficient to avoid significant penetrations of water between the abovementioned opposite surfaces; in any case, if deemed necessary, a specific sealing means, such as a gasket, may be associated to one of the projection 70 and the seat 63.

Depending on the flow rate, the membrane 28 of the regulator 20 is more or less deformed, in such a manner to substantially automatically adjust the passage section of the regulator itself, and thus the flow-rate, as described previously. After exiting from the hole 24 of the lower wall of the regulator 20 the water thus reaches the interspace BP, given that the body 60 is open at the lower part. By flowing into the interspace BP the water may reach the outlet 9 of the chamber 7. In the described example, the water then reaches, through the fitting 5, the auxiliary body 6, where the volumetric measurement of the flow is performed, by means of the flow measuring device 53-55.

As mentioned beforehand, the device according to the invention is provided with flow-rate adjustment means, prearranged for selectively acquiring two or more alternative operative configurations; these means, in the first embodiment, are represented by the flow regulator 20, the projection 70, the seat 63 with the holes 62 and the interspace BP.

The device 1 according to the invention is further provided with manoeuvre means, operable by a user with the aim of selecting a desired operative configuration of the abovementioned flow-rate adjustment means from among the possible alternative operative configurations. In the first embodiment, these means comprise the cap 30, whose upper part 31 is operable from outside the device 1, such that an angular movement imparted to the cap causes a movement of the adjusting element 70 between at least two adjusting positions.

In the first embodiment, the upper part 31 of the cap 30 has, in its upper face, a position reference element; in the shown example, such reference is represented by an arrow-shaped element, indicated with 71, embossed, printed or moulded on the upper face of the cap. Obviously, the shape and/or the position of this reference shall be considered only for exemplification purposes, and the reference may be obtained in any other manner, for example by means of the same diametral wall 31a of the cap 30. Furthermore, the body 2 has, in an external surface thereof that surrounds the mouth 7a, a plurality of reference elements, indicating possible angular positions that can be assigned to the cap 30. In the illustrated example these references provided for on the body 2 are represented by numbers embossed, printed or moulded on the upper face of the body 2; these references, indicated with 72, comprise in the example numbers from "0" to "3", to indicate the four different possible adjusting positions. Each of these angular positions assignable to the cap 30 corresponds to a given adjusting position of the projection 70. Obviously, also the form and/or the reference position 72 on the body 2 as illustrated in figures shall be deemed only for exemplifying purposes.

As mentioned, the cap 30 may be rotated in the mouth 7a, but without being extracted therefrom, between two extreme positions, which in the illustrated example are determined by the interference between the adjusting projection 70 with the two opposite longitudinal ends of the cavity 63a of the seat 63 made in the positioning body 60; it is clear that, in other possible embodiments, the abovementioned extreme positions, just like the respective intermediate positions, can be defined through positioning or abutment means different from the seat 63.

The two abovementioned extreme positions are shown in figures 9 and 10. Figure 9 shows the position of the cap - filter assembly wherein the arrow 71 is at symbol "0" of the references 72 provided for on the external edge of the mouth 7a. In such condition, the left side of the projection 70 (with reference to the figure) is substantially at or in abutment against the left end of the cavity 63a of the seat 63 of the positioning body 60 (figures 5 and 6), and in such condition the projection 70, which serves as a plug, closes the three holes 62 made at said cavity 63a. Represented in figure 10 instead is the opposite adjusting position, wherein the arrow 71 of the cap 30 is at symbol "3" of the references 72. In such condition, the right side of the projection 70 (with reference to the figure) is substantially at or in abutment against the right end of the cavity 63a, and in such condition the projection 70 is moved away from the three holes 62, leaving them open. In the shown example, between the two extreme positions of figures 9 and 10 provided for are two intermediate positions, corresponding to the angular positioning of the cap with the arrow 71 at symbols "1" and "2" of the references 72 of the body 2: in these two intermediate positions, the projection 70 closes two and one of the holes 62, respectively, and hence respectively leaves one and two holes 62 open.

As deducible, the interspace BP essentially serves as at least one part of a by-pass conduit, having an inlet and an outlet, respectively upstream and downstream of the flow regulator 20, and the passage section of this by-pass conduit - which in the example is made up of the inlet represented by the holes 62 can be maintained closed or open in an adjustable manner.

In the condition of figure 9, i.e. in the angular position of the cap -filter assembly in which the arrow 71 is at symbol "0", the by-pass conduit is closed, and hence the entire water flow must necessarily pass through the flow regulator 20. On the contrary, in the angular positions of the abovementioned assembly wherein the arrow 71 is at positions "1", "2" or "3", the inlet section of the by-pass conduit is more or less open, with a more or less large portion of the flow that can reach the outlet 9 of the chamber 7 without passing through the flow regulator 20.

The adjustment possibility provided for according to the invention guarantees an accurate and reliable operation of the device 1 under various conditions of use, and particularly also in cases where the device is installed in systems or appliances wherein the water pressure, in the respective water supply circuit, is very low. In such condition, in the devices according to the prior art, the flow regulator may not operate, i.e. it might remain in the condition of maximum passage section open (i.e. without a significant downward deformation of the corresponding membrane): in such situation, the flow rate determined by the regulator may not be sufficient, in that the passage gap of the flow regulator, even if open to the maximum extent, excessively reduces the flow rate allowed at the outlet of the device in case of low pressure, and this may have a negative impact on the operation of the part of the system or of the appliance arranged downstream.

In the first embodiment, in case of low water pressure, the by-pass conduit in the device according to the invention may be open in adjustable manner, as previously described, in such a manner to obtain a water flow in parallel to the flow that passes through the regulator 20, and thus increase the overall flow-rate that reaches the outlet 9 of the chamber 7. Obviously, in case of sufficient water pressure, the by-pass conduit may be maintained closed.

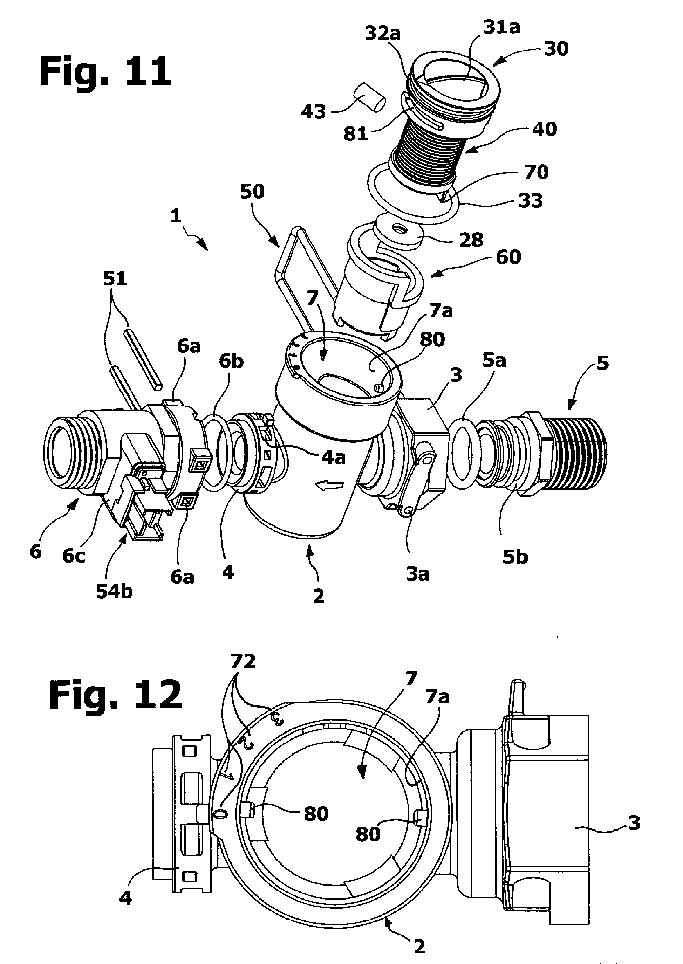

Illustrated in figures 11-15 is a second embodiment of the device according to the invention; reference numbers of the previous figures are used in these figures to indicate elements technically equivalent to those described above.

Also in this embodiment the cap 30 and the body 2 are provided with mutual coupling means adapted to acquire an engagement condition and a release condition. In the second embodiment the abovementioned mutual coupling means comprise a quick coupling, substantially of the type commonly referred to as bayonet coupling, modified with the aim of allowing that, in the engagement condition, the cap 30 be possibly imparted a rotation, but without the same cap being removed from the mouth 7a.

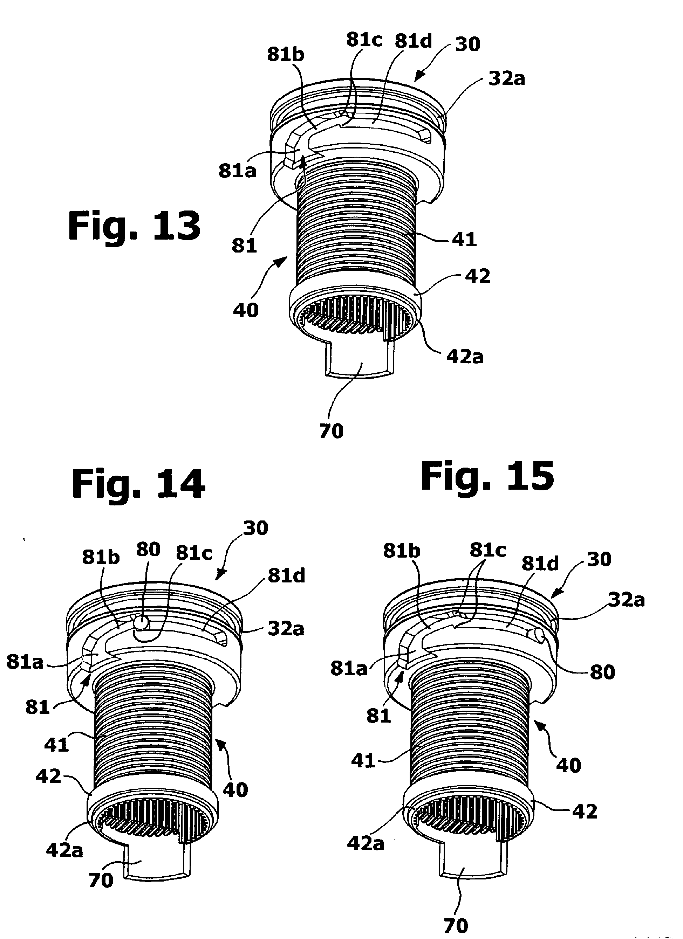

For such purpose, at the mouth 7a, provided for in the body 2 are two protrusions 80, in diametrically opposite positions and substantially projecting radially inwards the mouth 7a. The bayonet system comprises engagement seats or guides for the protrusions 80, made in opposite positions in a portion of the body of the cap 30 which is beneath the positioning throat 32a of the respective sealing gasket; one of such guides is indicated with 81 as a whole in figure 13.

It should be observed that the protrusions 80 and the guides 81 may be inverted with respect to each other, with the protrusions associated to the cap 30 and the guides associated to the body 2; likewise, the position of the guides 81 with respect to the sealing throat 32a may be different or inverted with respect to the one exemplified in the figures. Generally speaking, the shapes of the body 2 and of the cap 30 may be conveniently configured according to need, so as to allow an easy cycle of moulding of the various elements of the device, for example through few movements and/or parts in movement in the mould.

The guides 81 are essentially configured as a shaped notch or groove. However, the specific configuration of these guides 81 is not of the traditional type, this guides being an original preferred characteristic of one of the embodiments of the invention, specially configured to allow imparting to the cap 30 an adjustment movement, as will be clear hereinafter. Each guide 81 comprises an entrance part 81a, open on the lower edge of the respective portion of the body of the cap, through which a respective protrusion 80 may penetrate into the guide itself. After the entrance part 81a, the guide 81 is provided with a portion 81b generally tilted with respect to the entrance part 81a, so as to define an engagement area.

In the preferred but not exclusive embodiment, the tilted portion 81b of the guide ends with a step 81c, followed by a guide portion 81 d, definitely more extended in length with respect to the tilted portion 81b. The guide portion 81d is essentially flat, or extends or lies on a plane substantially perpendicular to the axis of the cap 30. A so-conceived portion 81 d represents a peculiar characteristic or the illustrated quick or bayonet coupling, i.e. innovative with respect to the caps of the known type. The two guides 81, obtained in diametrically opposite positions of the upper region of the body of the cap 30, are of analogous conception, but oppositely orientated with respect to each other.

In the second embodiment the cap 30 is fitted into the mouth 7a, fitting the protrusions 80 into the portions 80a of the guides 80. Subsequently, the user may rotate the cap 30, clockwise with respect to the figure. During the first section of the rotation movement, the tilted configuration of the guide portion 81b determines a sort of traction of the cap 30 inwards the chamber 7, due to the sliding of the protrusions 80 on the upper surface of the guide portion 81 a, and simultaneously determines a first engagement of the cap 30 with respect to the body 2. Upon overcoming the step 81 c, as illustrated in figure 14, the protrusions are in a hooked or consolidated engagement position, at the beginning of the portion 81d, and in this position the upper arrow 71 of the cap 30 is at symbol "0" of the references 72: in this condition the adjusting projection 70 closes the holes 62 of the positioning body 60, in a manner similar to the one described above with reference to the first embodiment. The alignment between the arrow 71 and symbol "0" also informs the user that the cap 30 is in the respective engagement position of the bayonet coupling, i.e. the position of blocking in axial direction, thus informing the user that the cap 30 is in liquid sealing and/or in a safety position.

In case the user wants to set a different flow-rate adjustment (or make the by-pass conduit represented by the interspace BP active), all that is required is to rotate the cap 30 further, in such a manner to move the arrow 71 to another reference position 72 ("1", "2" or "3"). Figure 15 represents the case in which the arrow 71 is at symbol "3", with the protrusion 80 that is thus positioned at the end of the guide 81, i.e. at the end of the guide portion 81d. When necessary, the extraction of the cap - filter assembly occurs in an inverse manner with respect to that just described above, i.e. by rotating the cap 30 in an opposite direction with respect to the previous one and determining the movement beyond step 81c with respect to the protrusions 80; for such purpose, a rotation torque - slightly greater than the one used when closing the cap and/or during adjustment - must be imparted to the cap. For such purpose, the quick engagement system may be conveniently provided with means for avoiding inadvertent openings during the adjustment steps: in particular, the step 81c has a portion tilted further towards the guide section 81d, so as to require a greater force in order to obtain an opening of the cap.

Therefore, according to the second embodiment of the invention, the cap 30 is allowed a significant or substantial further travel or "extra-travel" with respect to the position of figure 14, starting from which the blocking is achieved in the axial direction of the cap itself into the mouth 7a. This extra-travel substantially has no effect on the axial blocking of the cap 30 given that, as mentioned, the guide portion 81d is substantially on an orthogonal plane to the rotation axis of the cap 30, when the latter is inserted into the mouth 7a. For the remainder, the operation of the device 1 according to the second embodiment is conceptually analogous to the first embodiment.

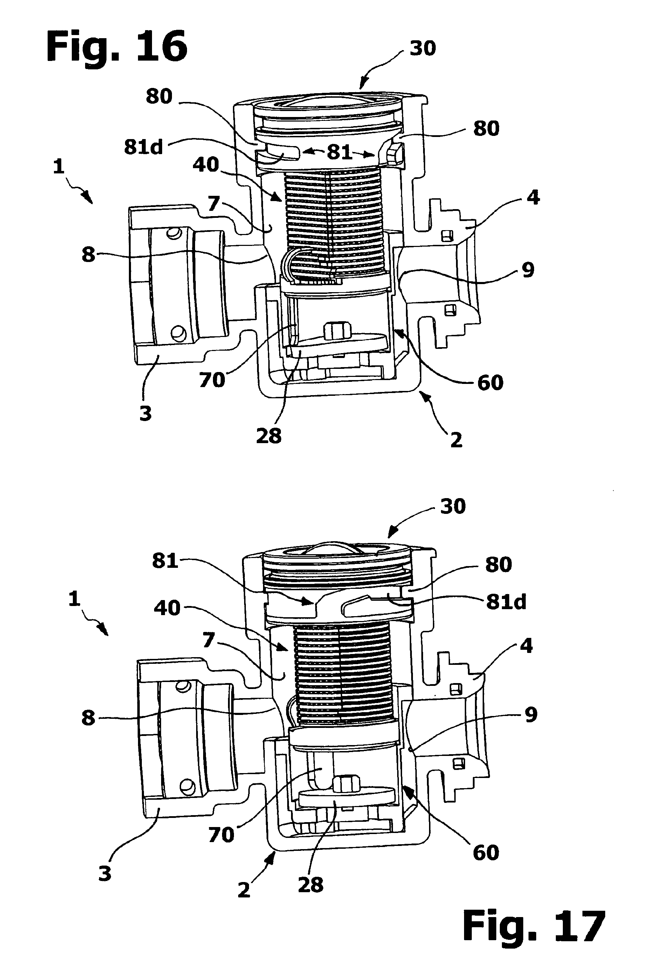

It should also be observed that, in an advantageous embodiment, the flow regulator may be integrated in the positioning body 60. For such purpose, as observable in figures 16 and 17, regarding a third embodiment of the invention, the bottom wall of the positioning body 60 is substantially configured like the bottom wall 23 of the regulator 20 illustrated in figures 7 and 8 (thus with the respective opening 24 provided with crosspieces, the respective pin 25 with teeth 26 and with the protrusions 27), while the peripheral wall of the body 21 of figures 7 and 8 is in this case obtained by the peripheral wall of the lower portion of the positioning body 60; also in figures 16 and 17 reference numbers of the previous figures are used to indicate elements technically equivalent to the ones described above.

Also in this embodiment the cap 30 and the mouth 7a are provided with mutual coupling means susceptible to acquire an engagement condition and a release condition, simultaneously allowing, in the engagement condition, to impart a rotation to the cap: contrary to the second embodiment, in this case, the extra-travel allowed to the cap 30 is provided for causing an axial movement of the cap, or a movement in height within the chamber 7 thereof, in order to modify the operating condition of the regulating device, in particular modifying the operative configuration of the membrane 28, through the projection 70.

The configuration of the coupling means of the third embodiment is similar to that of the second embodiment, but with the difference being that the end portion 81d of the guides 81 is also tilted, particularly with an opposite tilting (from top to bottom) with respect to the portion 81b ending with the step 81c. This tilting of the portion 81 d of one of the two guides 81 is clearly visible in figure 17.

As deducible, according to the configuration of the guides 81, the engagement of the protrusions 80 therein has the effect of determining, with the rotation of the cap 30, a greater or lower raising of the cap in the chamber 7, starting from the coupling position.

In this embodiment the by-pass system is not provided for, and the positioning body 60 is thus free of holes 62: the adjustment of the flow-rate is instead obtained by mechanically deforming the membrane 28, or the restrictor element of the flow regulator, integrated in the body 60 also in this case.

For such purpose, the projection 70 does not perform the function of closing the holes 62, as in the previous embodiments, but serves as an element that can be moved to modify, depending on its position, the size of the passage gap for the water flow, defined between the membrane 28 and the underlying outlet section of the flow regulator. In other words, the projection 70 has the function of deforming the membrane 28, with the aim of varying the distance between at least one portion of the membrane itself and the underlying outlet section of the regulator, in such a manner to calibrate or predefine the maximum flow-rate value.

In a possible variant of this embodiment, the outlet 9, instead of being lateral, may be defined in the body 2 in a position opposite to the mouth 7a, and the positioning body 60 may be omitted, providing for a flow regulator of the type indicated in figures 7 and 8 mounted directly in an opposite seat of the body 2, in such a position to be regulated or calibrated through the projection 70.

Figure 16 illustrates the position wherein the protrusions 80 have slightly the positioning body 60 may be omitted, providing for a flow regulator of the type indicated in figures 7 and 8 mounted directly in a suitable seat of the body 2, in such a position to be regulated or calibrated through the projection 70.

Figure 16 illustrates the position wherein the protrusions 80 have slightly overcame the step 81c of the guides 81; in this position, the arrow 71 of the cap 30 is at symbol "0" of the references 72. The position of the cap - filter assembly is such that the adjusting projection 70 presses to the maximum extent a peripheral part of the membrane 28 onto the bottom wall of the body 60, which - as mentioned - provides the outlet section of the flow regulator (with the respective opening 24 provided with crosspieces, the respective pin 25 and with the protrusions 27, as in figures 6 and 7). In this condition, the flow regulator passage section is minimum, i.e. the flow regulator is calibrated for a minimum flow-rate.

In case the user wants to set a different flow rate adjustment (i.e. vary the size of the passage section of the flow regulator), all that is required is to further move the cap in an angular manner, so as to move the arrow 71 at one of the references 72 ("1", "2" or "3"). Figure 17 represents the case of arrow 71 at symbol "3", in which the protrusions 80 are found at the end of the guides 81, i.e. at the end of the guide portions 81d: the cap - filter assembly is found in a condition of maximum raising within the chamber 7, wherein the projection 70 does not determine any deformation of the membrane 28 of the flow regulator integrated in the positioning body 60 (or it determines a minimum deformation of the membrane 28, or the flow regulator is calibrated for a maximum flow rate). In this embodiment the reference positions 72 are inverted with respect to those of the first two embodiments, in that the initial position "0" corresponds to the position of the membrane 28 compressed to the maximum extent; when it is desired to increase the flow-rate, and hence the flow regulator passage section, for example in case of low network pressure, the user or the installer may adjust the other positions, by rotating the cap - filter assembly, which loosens its compression on the membrane 28, which in turn opens the passage section further. However, also in this embodiment, the alignment between the arrow 71 and the symbol "0" informs the user that the cap 30 is in the respective bayonet coupling engagement position. Obviously, also these references may be inverted with respect to the case illustrated in the figures.

Hence, as clear, different distances of the projection 70 correspond to different adjusting positions with respect to the mouth 7a: due to the tilted

In the third, embodiment the projection 70 may have a smaller or greater width with respect to the preceding embodiments, and its lower end may be conveniently configured to reduce or increase the surface of contact with the membrane or can be configured in such a manner to operate on the membrane according to the predefined ways; in the shown example, the lower end of the projection 70 is for example at least partially rounded, so as to avoid risks of damaging the membrane during the movement on the respective surface.

As shown, also in the third embodiment, the operative configuration of the means (the flow regulator) that determine the allowed flow-rate at the outlet may be selectively adapted to the conditions of use.

In position "0", the membrane 28 is set in a mechanical manner, through the projection 70, a maximum compression or deformation, which determines a reduction of the passage section for the fluid in the flow regulator. By rotating the cap - filter assembly, the projection 70 is raised, preferably in a manner proportional to the positions indicated by the references 72, such that the membrane may raise elastically, so increasing the passage section, and hence varying the water flow-rate allowed at the outlet 9 of the device.

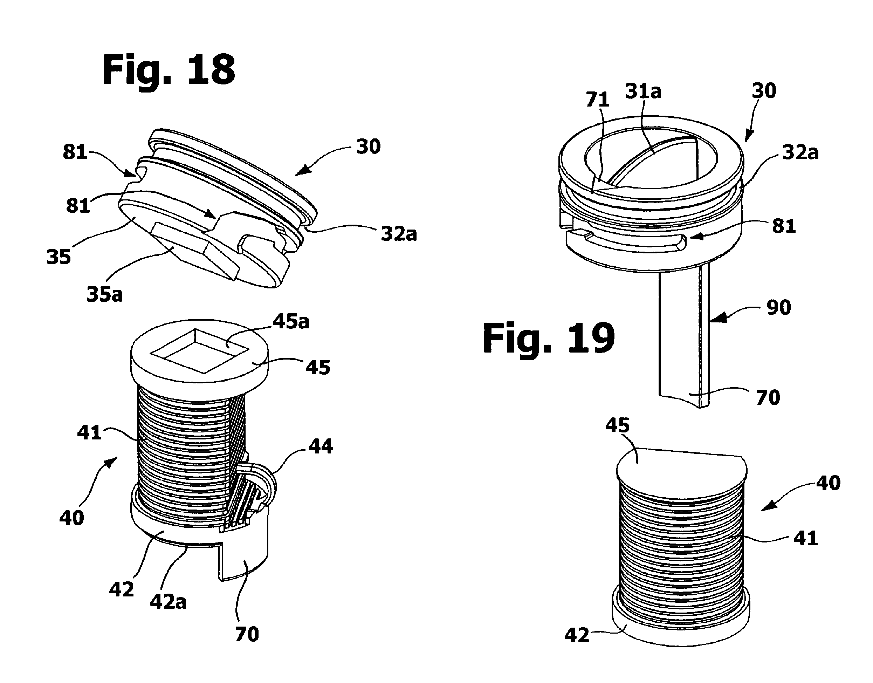

In the previous embodiments the cap 30 and the filter 40 are configured in a single piece, but this characteristic shall be deemed only as preferential and not essential for the invention, given that the two parts can be formed by distinct pieces. Embodiments of this type are illustrated in figures 18-20, which use the reference numbers of the previous figures to indicate elements technically equivalent to the ones described.

In the fourth embodiment, illustrated in figure 18, the cap 30 and the filter 40 are configured as distinct parts, provided with means for mutual coupling, configured such that a movement imparted to the cap 30 is transferred to the underlying filter 40. For such purpose, present in the upper area of the filter 40 is a coupling part configured to be engaged or cooperate with a coupling part present in the lower area of the cap 30: more particularly, in the shown example, the cap 30 has a lower face 35 obtained in which is at least one protrusion projecting downwards 35a, having for example a quadrangular section; on the other side, the filter 40 has an upper closed wall 45, defined in which is a seat 45a for receiving the protrusion 35a. In the illustrated example the cap 30 is provided with guides 81 substantially of the type described with reference to the second embodiment, intended to cooperate with protrusions 80 present at the mouth 7a of the chamber 7. On the other side, the filter 40 has the regulating projection 70 at its lower end, and also the element 44 for fixing the magnet 43.

In general, the coupling parts provided for between the cap and the filter preferably have shapes at least partially complementary to each other (which obviously may defer from the one provided for exemplification purposes herein), even though this is not strictly indispensable for the implementation of the invention. As a matter of fact, regardless of the specific configuration, it is sufficient that the cap 30 have - in its lower portion - an engagement means (the protrusion 35a, in the example) adapted to mechanically cooperate with the engagement means (the seat 45a, in the example) provided for in an upper portion of the filter 40, in such a manner to allow that a rotation movement of the cap causes a movement of the filter. Obviously, it is possible to have an arrangement inverse to the one exemplified in the figures, i.e. such that it is the cap 30 that has a lower part receiving a protrusion of the filter 40, preferably axial and projecting towards the cap.

The cap 30 and the filter 40 according to the fourth embodiment may also be configured to obtain - with respect to each other - a coupling or a co-operation different from a direct mechanical interconnection, using a magnetic coupling for such purpose. In this variant, the cap integrates at least one magnetic element, such as a permanent magnet, adapted to be magnetically coupled with at least one respective magnetic element (such as a permanent magnet) integrated in the filter, or vice versa. These magnetic elements are conceived, in terms of dimensions, orientations and respective magnetic forces, with the aim of obtaining a magnetic coupling such that a movement imparted to the cap is transferred to the filter. Thus, in practice, in this embodiment, the magnetic elements replace, respectively, the protrusion 35a and the seat 45a of figure 18, but they serve the same purpose, particularly in terms of mechanical transmission of the movement from the cap to the filter. Obviously, each of the two magnetic elements mentioned above may be possibly made up of a body made of non-magnetized ferromagnetic material, instead of a magnet.

A configuration in distinct parts of the cap 30 and of the filter 40, provided with mechanical or magnetic coupling means, is also useable in the case of the first and third embodiment.

Also in the fifth embodiment, illustrated in figure 19, the cap 30 and the filter 40 are configured as distinct parts, but with the adjusting projection 70 which is associated or borne by the cap 30, instead of the filter 40.

In this solution, the body of the cap 30 has a lower projection 90 axially extended and in eccentric position, whose end portion forms the projection 70; in the illustrated example the cap 30 is provided with guides 81 substantially of the type described with reference to the second embodiment, i.e. with the guide portions 81d substantially flat; the end portion of the projection 90, that embodies the adjustment projection 70, is likewise configured like in the case of the second embodiment, so as to serve as a closure baffle for the holes 62 of the positioning body 60. Obviously, the bayonet system of the cap 30 of figure 19 may be analogous to the one described with reference to the third embodiment (with the guide portions 81d tilted), regarding the case in which the projection 70 is intended to interact with the membrane 28 of the flow regulator. In this solution the filter 40 has the corresponding upper wall 45 closed and is not provided with the projection 70. A configuration of the type illustrated in figure 19, with the adjusting element associated or integral with the cap 30 è is useable also in the case of the first embodiment.

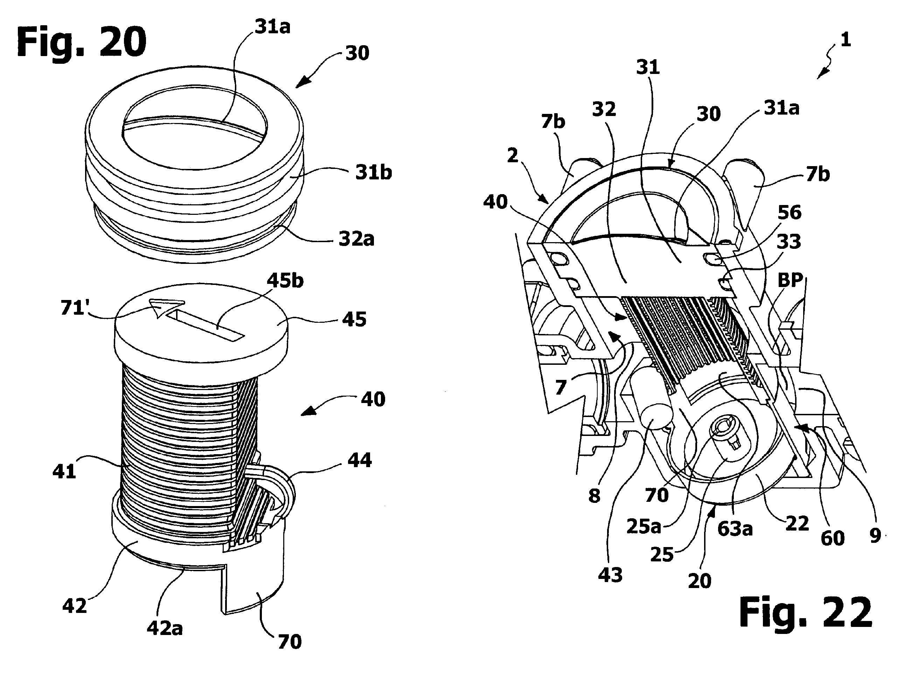

Figure 20 illustrates a sixth possible embodiment, wherein the cap 30 and the filter 40 are configured as distinct parts, and the manoeuvre or manual selection means of the device comprise the purification member, i.e. the filter 40, or they are associated thereto.

In this solution, formed in the upper closed part 45 of the filter 40 is a seat for engaging the head of a tool, such as for example a screwdriver, useable for imparting a rotation to the filter. In the illustrated example provided for such purpose is a diametral notch, indicated with 45b; embossed, moulded or formed at an end of the cavity 45b, is a reference position means, represented in this case by an arrow-shaped element 71'. The filter 40 also comprises the adjusting projection 70, for example intended to cooperate with a by-pass system, as described with reference to the first embodiment, or adapted to operate on the regulator 20, as described with reference to the third embodiment.

In this embodiment the cap 30 is constrained at the mouth 7a, for example by means of a system with pins or fork as previously described (see elements 51 or 56 of the first embodiment). As deducible, after removing the cap 30, the head of the tool, such as a screwdriver, is inserted into the notch 45b, in such a manner to impart to the filter 40, and hence the projection 70, the desired rotation depending on the adjustment to be performed. The visual control of the angular position is facilitated by the arrow 71', moved - from time to time - in substantial alignment with the corresponding reference 72 provided for on the edge of the mouth 7a; obviously, in this solution the references 72 may also be provided for inside the chamber 7, on the peripheral wall.

Preferably, the components are dimensioned such that, in the condition of closure of the cap 30, the lower wall 35 of the cap itself exerts a given downward pressure on the upper wall 45 of the filter, so as to ensure maintaining the proper operative position of the filter and avoid unwanted rotations and movements thereof.

The means for constraining the cap 30 at the mouth 7a may also be of different type from the one exemplified in figure 20, and comprise for example a bayonet coupling or a threaded coupling. As a matter of fact, it should be considered that in this variant the cap 30 must not necessarily be able to rotate to achieve the above said adjustment. In these variants, in order to avoid unwanted rotations or movements of the filter 40 - during the closure of the cap 30 or subsequently - between the body of the filter 40 and the positioning body 60 conveniently provided for may be fixing and/or anti-rotation means, for example a toothed coupling with a tooth obtained peripherally on the body of the filter which cooperates with a series of teeth obtained in the positioning body 60 (for example at the coupling between the lower step 42a of the body of the filter 40 and the inner step 65 of the positioning body 60; for reference see figures 5 and 6). Also in these variants, in the condition of closure of the cap 30, the lower wall 35 of the cap preferably exerts a given downward pressure on the upper wall 45 of the filter, in order to allow maintaining the correct operating position; however, the operative position of the filter may also be maintained only through the abovementioned fixing means.

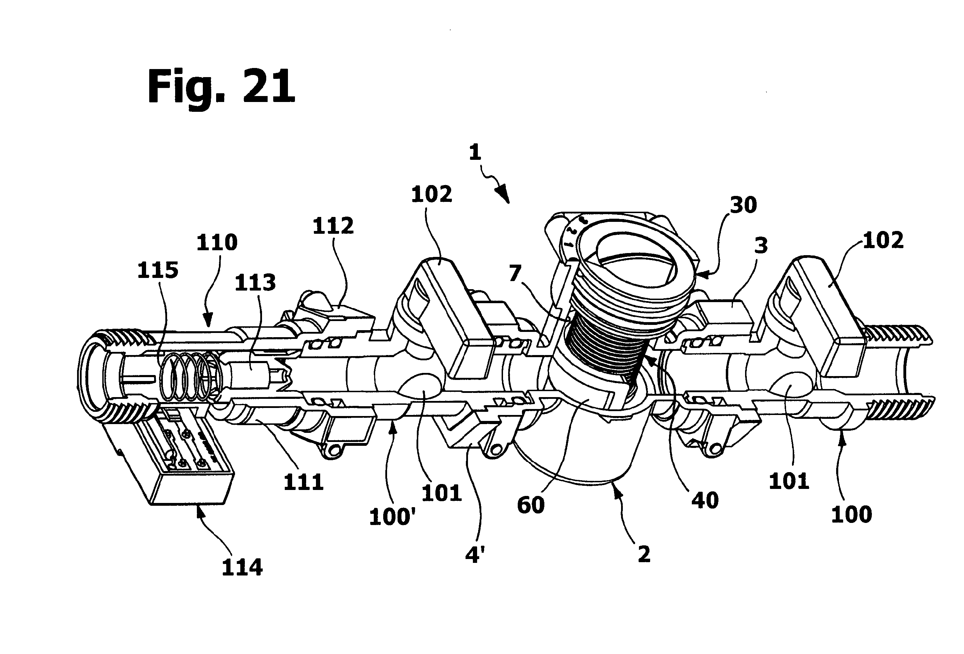

Figure 21 illustrates a further example of use of the device according to the invention; reference numbers of the previous figures are used in this figure to indicate elements technically equivalent to the ones already described previously. In this application, the outlet fitting of the body 2, indicated in this case with 4', has a similar construction as the inlet fitting 3.

The insert 5 of figures 1-3 and 11 is replaced by a tap 100, of per se known construction, having a hollow plastic or metal body, which accommodates a ball valve 101 operable through a handle or lever 102. Connected to the outlet fitting 4' of the body 2 is the inlet of a second tap 100', with a ball valve 101 and handle 102.

Then, connected to the outlet of the tap 100' is the inlet of a flow meter or a water flow switch, indicated with 110, also of per se known conception and operation, which replaces the auxiliary device or body 6 of figures 1-3 and 11 with the corresponding flow measuring device having an impeller. In the illustrated example, the flow meter or water flow switch 110 has an axially hollow main body 111, having an inlet fitting 112 of conception substantially similar to the fittings 3 and 4' of the body 2, and a threaded outlet fitting, not indicated; alternatively, the inlet fitting 112 may be complementary to the fittings 3 and 4', also for a possible direct connection to the body 2. The flow meter or water flow switch 110 comprises an excitation element 113, mounted moveable inside the axial passage of the body 111 and intended to be moved to a greater or smaller extent by the water flow which passes through the same body 111, depending on the flow-rate thereof. Provided for outside the body 111 is a detection unit 114, adapted to measure the entity of the movement of the excitation element 113 or, more simply, to detect a movement of the element 113 exceeding a given predetermined threshold. The excitation element 113 may comprise a moveable body made of plastic material, accommodating a permanent magnet, and the detection unit 114 may comprise a magnetic sensor, for example of the "reed" type.

The detection performed through the unit 114 may be used for generating a signal indicating a -rate value, for example with the aim of controlling a further device - not represented - upon exceeding a determined flow-rate value. In the illustrated example the device 1 and the flow meter/water flow switch 110 are mounted horizontally, and preferably provided with a helical spring 115 for pressing the excitation element 113 towards a respective idle position; in case of vertical mounting of the device 1 and/or of the flow meter or water flow switch , the spring 115 is not required.

The taps 100 and 100' allow closing the water circuit upstream and downstream of the body 2 of the device 1, respectively, for example when access is required inside the chamber 7, for replacing the filter 40 or for periodical cleaning thereof. In such configuration, the tap 100' is adapted to prevent an emptying of the water system of the user appliance, such as for example a heating system, boiler, etc.

In order to obtain this prevent-emptying operation, according to an independent aspect of the invention, the tap 100' may be replaced by a unidirectional valve or check valve (non return valve), particularly of the type adapted to let circulate only the flow from the device 1 towards the user appliance downstream, and not the contrary. Such check-valve may also be possibly integrated in the device 110, and also for example be obtained from the same moveable excitation element 113, which in such application is preferably configured in such a manner to attain a valve and/or sealing with respect to a suitable seat obtained in the body 111. Such inventive technical solution may be applied in combination with devices different form the one that forms object of the present invention.

Obviously the arrangement of the auxiliary components 5, 6, 100, 100' and 110 illustrated in the figures shall be deemed strictly for simplification purposes, other combinations being possible, even in the absence of one or more of the components themselves (for example the absence of the of device 110, or tap 100' downstream of device 110, device 110 and auxiliary body 6 with corresponding flow measuring device in series and so on and so forth).

In further possible embodiments, the adjusting element movable between a plurality of alternative adjusting positions may be obtained from, operatively associated to, or formed integrally with, a member of the device 1 different from the cap and the filter, such as for example a member of the conditioning means, and more particularly to the flow-rate regulation means. A possible solution in this sense is illustrated in figure 22, wherein the same reference numbers of the previous figures are used to indicate elements technically equivalent to the ones already described.

This solution is widely similar to the first embodiment (for reference see figure 2), comprising a by-pass system: in this variant, the adjusting projection 70 is not however part of the filter 40, given that it is obtained integrally with the body of the flow regulator 20; obviously the projection 70 may be fixed or operatively coupled to the regulator 20, instead of being made integral with the body thereof. As shown in figure 22, in this solution the projection 70 projects upwards, from the upper edge of the peripheral wall 22 of the body of the regulator 20, and it is configured in such a manner to be operatively inserted into the cavity 63a of the seat 63, in which the inlet holes 62 of the by-pass conduit BP are made (for reference see figures 5-6 and 9-10 regarding the first embodiment).

In this embodiment, the manoeuvre means for performing the adjustment comprise a seat, obtained at the upper end of the pin 25, for engaging the head of a tool, such as for example a screwdriver, useable to impart a rotation to the flow regulator 20 inside the hollow body 60, with the latter instead being prevented from rotating for the reasons explained above (see the description outlined regarding the axial protrusion 67 observable in figures 5 and 6): in the illustrated example the abovementioned seat is represented by a diametral notch, indicated with 25a.

The operation method of the variant of figure 22, regarding the co-operation between the projection 70 and the cavity 63a with the corresponding inlet holes of the by-pass conduit BP, are analogous to those of the second embodiment. In case a regulation of the operative condition of the device 1 is required, the cap - filter assembly is removed from the body 2 and, by means of the abovementioned tool, the operator may impart the required angular movement to the regulator 20. Visual reference means are not strictly necessary in this variant to perform the adjustment, given that the operator can directly see the position of the projection 70; however, suitable reference symbols for indicating the operative position of the projection 70 may be provided for, such as for example on the upper part of the edge of the body 60.

It shall be clear to a man skilled in the art that the idea on which this variants based is variously combinable with the other embodiments described previously and/or other parts or members of the device 1: It is for example clear that the filter 40 might be connected to the body of the regulator 20 provided with the projection 70: the regulator and filter may be made integral or provide for mutual coupling means, such that the rotation imparted to the filter, to the cap or to the cap - filter assembly determines the rotation of the regulator 20, and hence of the projection 70; in the same manner the cap might be connected to the body of the regulator 20 provided with the projection 70, for the same adjustment purposes.

In other possible variant embodiments, not shown, an element that performs the functions of the projection 70 may be provided for in a fixed position, while movable is a different member of the device 1, such as a member of the flow-rate regulation means: for example a flow regulator 20 which can be rotated in the chamber 7 or body 60, so as to interact with a fixed adjusting element, for example obtained in the body 2, and where the variable interaction between the two parts due to the relative movement is such to modify the operative position of the membrane or any other chocking member of the regulator replacing the membrane (see the subsequent variants).

Characteristics and advantages of the present invention are clear from the outlined description. The invention allows the user to select or predefine a desired operative configuration of the flow rate regulation means of the device from among a plurality of possible alternative configurations.

This characteristic allows adapting the operability of the device for application purposes, and also modify the operability of the device in case of variations of the installation conditions and/or conditions of the water circuit along which the device itself is to be or is already installed. The device according to the invention is thus versatile to use and guarantees an accurate and reliable operation in various conditions of use. The device finds a preferred application in combination with heating and room conditioning appliances/systems, as well as hydro-sanitary systems, for example boilers, air conditioners, water heaters. The versatility of the device allows its application also in combination with household appliances supplied with water, such as for example washing machines (laundry washing machines and dish-washers). The adjustment operations made possible through the invention may be performed in a simple and quick manner, also operating from outside the device, like in the first five embodiments described. Furthermore, the device is simple and inexpensive to manufacture at industrial level, in that its main parts (such as the body 2, the cap 30, the filter 40, the body 60, the body of the regulator 20) may be obtained by moulding thermoplastic material, the auxiliary parts - such as the various gaskets, pins 51, forks 50, 56, regulator 20 (when of the standardised type) or the membrane 28 - also being components usually available in the market.

It is clear that the present invention may be subjected to many variants by a man skilled in the art without departing from the scope of the invention as defined in the attached claims.

A movable adjusting element serving the purpose of that above with 70 may be associated to the magnetic element 43, for example when the latter is the only purification member of the device.

Additionally or alternatively to the purification member 40 and/or 43, the device according to the invention may be provided with a treatment member of another type, such as a cartridge containing a purification substance, for example activated carbon or decalcification resins.

The flow regulator device used in the device according to the invention may be of any other known type, not necessarily with a deformable membrane, for example with a rigid chocking member or plug, such as a plate, which is movable under the action of the inlet flow in contrast to elastic or resilient means, such as a spring, to increase or reduce the passage section with the aim of regulating the flow-rate automatically; in such case, the adjustment performed by means of the cap and/or filter, which occurs in a manner similar to the ones described previously, is provided for to vary the state of compression of the abovementioned resilient or elastic members, that is their elastic characteristic (for example making the springs more rigid, compressing it on the side opposite to where it abuts against the plate, and thus without necessarily varying the initial position of the plate itself).

In a further variant embodiment, the adjusting projection may be configured such that the rotation imparted to the cap or to the filter has the effect of raising to a greater or smaller extent at least one portion of the chocking member or membrane 28 of the flow regulator, with respect to the underlying outlet section, hence varying the flow-rate, i.e. in a manner substantially opposite to the third embodiment. In such case, the projection 70 may for example have a substantially L-shaped configuration, with a substantially vertical section, which is wedged into the space between the peripheral edge of the membrane 28 and the wall 22 of the body of the regulator, and with a horizontal end section, which is wedged beneath the membrane 28.

Provided for in a further variant is a rotation of the cap and/or of the filter which causes only an angular movement of the projection, i.e. without also an axial movement like in the third embodiment. In such solution, the chocking member may be provided on the upper part with a tilted surface, on which the adjusting projection operates, still with the aim of varying the distance between at least one portion of the chocking member itself and the underlying outlet section of the flow regulator, with the aim of varying the passage section and thus the water flow-rate; in such solution, for example, mounted on the membrane 28 can be a small ring defining the abovementioned tilted surface, intended to cooperate with the lower end of the projection 70.

In another possible solution, the cap 30 is obtained at least partially using transparent material, in particular with the aim of visually controlling the adjusting position (for example in the case of the variant of figure 20) and/or for visually inspecting the filter (for example for controlling its state of clogging) without necessarily having to remove the cap itself.

Associated to the device 1 subject of the invention may be one or more additional units or functional elements, such as the ones previously described with 5, 6, 100, 100' and 110 (or the mentioned check valve, also having its own body); this or these units may be associated to the device 1, for example by means of hydraulic connectors, or at least be partially integrated in the device 1, or have a body associated or integrated with the body 2 of the device 1.

The chamber 7, and thus the cap - filter assembly and/or the flow regulator accommodated therein, may be tilted (for example by 45°) with respect to a common axial direction of the inlet and outlet fittings of the holder body 2, i.e. it can have shapes such facilitate the dynamics of the flow.

## Claims

1. Device for treating a liquid flow for appliances and systems supplied with said liquid, comprising
- a holder body (2) inserted in which are means for treating the liquid flow (40, 43), the holder body (2) defining a chamber (7) having an inlet opening (8) for the liquid flow to be treated, an outlet opening (9) for the flow of the treated liquid, and an access mouth (7a) through which the means for treating the liquid flow (40, 43) can be inserted in the chamber (7), the means for treating comprising at least one purification member (40; 43), particularly a filter (40), accommodated in the chamber (7) in an intermediate position between the inlet opening (8) and the outlet opening (9),
- a cap (30) having a body with a portion operable by a user (31a) and a sealing portion (32) adapted to operate in a liquid sealing manner with respect to the access mouth (7a), the purification member (40; 43) lying in the chamber (7) under the cap (30),
wherein the holder body (2) and the cap (30) have mutual coupling means (7b, 31b, 56; 80, 81) configured for maintaining, in an engagement condition thereof, the cap (30) in a position of sealing closure of the access mouth (7a), the coupling means (7b, 31b, 56; 80, 81) being susceptible to acquire a release condition, in which the cap (30) is removable from the access mouth (7a), for allowing removal of the purification member (40; 43) from the chamber (7), and wherein in the chamber (7) of the holder body (2) a flow regulator (20) is also arranged, downstream of the purification member (40; 43) and upstream of the outlet opening (9), the flow regulator (20) having a restrictor member (28) and an outlet section (24-27) defining therebetween a passage gap for the liquid flow, the restrictor member (28) being a deformable membrane or movable under the action of the flow of the liquid,
**characterised in that** adjustment means (60, 70, BP; 60, 70; 90) are further provided in the chamber (7), for selectively predefining or adjusting the flow-rate allowed at the outlet opening (9), the adjustment means (60, 70, BP; 60, 70; 90) being prearranged for selectively acquiring two or more alternative operative configurations of the flow regulator, and **in that** the device (1) further comprises manoeuvre means, operable by a user for the purpose of selecting a desired operative configuration of the adjustment means (60, 70, BP; 60, 70; 90) among the abovesaid alternative operative configurations.

2. Device according to claim 1, wherein the adjustment means (60, 70, BP; 60, 70; 90) comprise an adjusting element (70; 90) selectively movable between a plurality of alternative adjusting positions (72), the adjusting element (70; 90) being operatively associated to, or made integral with at least one of
- the cap (30),
- the purification member (40; 43), and
- a further member (21) belonging to the adjustment means.

3. Device according to claim 1 or 2, wherein the manoeuvre means (30; 40) comprise at least one of
- the cap (30),
- the purification member (40; 43), and
- a further member (21) belonging to the adjustment means,
where in particular:
- the holder body (2) has a plurality of reference elements (72) indicating respective possible angular positions of at least one of the cap (30), the purification member (40; 43) and the said further member (21), to which the adjusting positions of the adjusting element (70; 90) correspond, and/or
- at least one of the cap (30), the purification member (40; 43) and the further member (21) has a position reference means (71; 31a).

4. Device according to claim 2, wherein the adjustment means (60, 70, BP; 60, 70; 90) and the manoeuvre means (30; 40) are configured such that:
- a movement imparted to one of the cap (30), the purification member (40; 43) and the said further member (21) causes a displacement of the adjusting element (70; 90) between at least two said adjusting positions.

5. Device according to claim 2, wherein at least one of the purification member (40; 43) and the said further member (21) is operatively associated to, or made integral with, a body of the cap (30).

6. Device according to claim 2, wherein
- at least one of the purification member (40; 43) and the said further member (21) is configured as a component separated from the cap (30),
- the cap (30) is coupled or prearranged to be coupled or cooperate with the purification member (40; 43) or the said further member (21), such that a movement imparted manually to the cap (30) causes a movement of the purification member (40; 43) and/or of the said further member (21), and thus a movement of the adjusting element (70) between two said adjusting positions (72).

7. Device according to claim 2, wherein the adjustment means (60, 70, BP; 60, 70; 90) comprise a by-pass conduit (BP) having an inlet, upstream of the flow regulator (20), and an outlet, downstream of the flow regulator (20) and upstream of the outlet opening (9), the by-pass conduit (BP) being configured such that
- in one first said adjusting position, the adjusting element (70) completely obstructs, or obstructs to a first extent, a passage section (62) of the by-pass conduit (BP), and
- in one second said adjusting position, the adjusting element (70) does not obstructs the passage section (62) of the by-pass conduit (BP), or obstructs it to a different extent with respect to the first adjusting position.

8. Device according to claim 7, wherein
- the adjusting means (20, 60, 70, BP; 20, 60, 70; 90) comprise a hollow body (60), which is inserted in the chamber (7), the hollow body (60) at least partially housing the flow regulator (20) or being part of the flow regulator (20),
- the hollow body (60) has a wall (61, 64) which at least partially defines the by-pass conduit (BP), particularly the inlet (62) thereof.

9. Device according to claim 8, wherein
- between a wall (61, 64) of the hollow body (60) and the wall of the holder body (2) delimiting the chamber (7) sealing means (66) are operative, preferably operative upstream of an inlet (62) of the by-pass conduit (BP) and comprising a projecting part or edge (66) of the said wall (61, 64) of the hollow body (60) abutting against the wall of the holder body (2) delimiting the chamber (7), and/or
- the hollow body (60) and the holder body (2) have mutual engagement means (67) configured to allow insertion of the hollow body (60) in a predetermined position within the chamber (7) and/or to ensure maintenance of a predetermined position by the hollow body (60) in the chamber (7), and/or
- the hollow body (60) defines a positioning or sealing seat (65) for a portion (42) of the purification member (40), the positioning seat comprising in particular a step or a projecting element (65) of said wall (61, 64) of the hollow body (60) which couples with a surface of the purification member (40).

10. Device according to claim 2, wherein the adjusting element (70; 90) is displaceable to modify at least one operative characteristic of the flow regulator (20) selected from:
- the distance between at least one portion of the restrictor member (28) and the outlet section (24-27) of the flow regulator (20),
- the size or section of said passage gap,
- an elastic or resilience characteristic of a component (28) of the flow regulator (20).

11. Device according to claim 10, wherein the restrictor member comprises one of:
- an elastically deformable body (28), and the adjusting element (70; 90) is prearranged to cause a deformation or movement of the elastically deformable body (28), preferably in a substantially axial direction of the chamber (7), the extent of the deformation or movement being selectively variable depending on the adjusting position (72) of the adjusting element (70; 90),
- an at least partially rigid body on which a resilient element or spring operates, preferably in a direction opposite to that of the liquid flow, and the adjusting element is selectively displaceable to cause a variation of the elastic or resilience characteristics of the said resilient element or spring or of the position thereof.

12. Device according to claim 4, wherein the mutual coupling means (7b, 31b, 56; 80, 81) are configured such that, in said engagement condition, the cap (30) cannot be extracted from the access mouth (7a) but a movement can be imparted to the cap (30).

13. Device according to claim 1 or 12, wherein the mutual coupling means (7b, 31b, 56; 80, 81) are configured such that an extra-travel (81d) can be imparted to the cap (30), with respect to a first predefined position thereof starting from which said engagement condition of the mutual coupling means (7b, 31b, 56; 80, 81) is attained, and wherein a movement imparted manually to the cap (30) within said extra-travel (81d) causes a movement of the adjusting element (70; 90) between at least two said adjusting positions (72).

14. Device according to at least one of the preceding claims, further comprising one or more additional functional units in fluid communication with at least one of the inlet opening (8) and the outlet opening (9) of the holder body (2).

15. Device according to claim 14, wherein said additional unit or units is/are selected from among a flow measuring device (6, 53-55), a water flow switch or flow meter (110), a connection fitting (5), a tap (100, 100'), a unidirectional valve.

## Patentansprüche

1. Vorrichtung zum Behandeln eines Flüssigkeitsstroms für Geräte und Systeme, denen die Flüssigkeit zugeführt wird, wobei sie umfasst:
einen Haltekörper (2), in den Einrichtungen (40, 43) zum Behandeln des Flüssigkeitsstroms eingesetzt sind, wobei der Haltekörper (2) eine Kammer (7) mit einer Einlassöffnung (8) für den zu behandelnden Flüssigkeitsstrom, eine Auslassöffnung (9) für den Strom der behandelten Flüssigkeit sowie eine Zugangsmündung (7a) aufweist, über die die Einrichtungen (40, 43) zum Behandeln des Flüssigkeitsstroms in die Kammer (7) eingeführt werden können, und die Einrichtungen (40; 43) zum Behandeln wenigstens ein Reinigungsteil, insbesondere einen Filter (40), umfassen, der in der Kammer (7) an einer Zwischenposition zwischen der Einlassöffnung (8) und der Auslassöffnung (9) aufgenommen ist,
eine Kappe (30), die einen Körper mit einem Abschnitt, der von einem Benutzer (31a) betätigt werden kann, und einen Dichtungsabschnitt (32) hat, der so eingerichtet ist, dass er in Bezug auf die Zugangsmündung (7a) als Flüssigkeitsdichtung wirkt, wobei das Reinigungsteil (40; 43) unter der Kappe (30) in der Kammer (7) liegt,
wobei der Haltekörper (2) und die Kappe (30) Einrichtungen (7b, 31b, 56; 80, 81) zum gegenseitigen Koppeln aufweisen, die so eingerichtet sind, dass sie in einem Eingriffszustand derselben die Kappe (30) in einer Position zum abdichtenden Verschließen der Zugangsmündung (7a) halten, die Kopplungseinrichtungen (7b, 31b, 56; 80, 81) dazu neigen, einen Lösezustand einzunehmen, in dem die Kappe (30) von der Zugangsmündung (7a) entfernt werden kann, um Entfernen des Reinigungsteiles (40; 43) aus der Kammer (7) zuzulassen, und in der Kammer (7) des Haltekörpers (2) des Weiteren ein Durchflussregler (20) stromab von dem Reinigungsteil (40; 43) und stromauf von der Auslassöffnung (9) angeordnet ist, der Durchflussregler (20) ein Drosselelement (28) sowie einen Auslassabschnitt (24-27) hat, zwischen denen ein Durchlassspalt für den Flüssigkeitsstrom ausgebildet ist, und das Drosselelement (28) eine verformbare Membran ist oder unter der Wirkung des Stroms der Flüssigkeit bewegt werden kann,
**dadurch gekennzeichnet, dass** weiterhin Reguliereinrichtungen (60, 70, BP; 60, 70; 90) in der Kammer (7) vorhanden sind, um selektiv die an der Auslassöffnung (9) zulässige Durchflussgeschwindigkeit vorzudefinieren oder zu regulieren, wobei die Reguliereinrichtungen (60, 70, BP; 60, 70; 90) so eingerichtet sind, dass sie selektiv zwei oder mehr alternative Funktionszustände des Durchflussreglers einnehmen, und dass die Vorrichtung (1) des Weiteren Manövriereinrichtungen umfasst, die von einem Benutzer betätigt werden können, um einen gewünschten Funktionszustand der Reguliereinrichtungen (60, 70, BP; 60, 70; 90) aus den alternativen Funktionszuständen auszuwählen.

2. Vorrichtung nach Anspruch 1, wobei die Reguliereinrichtungen (60, 70, BP; 60, 70; 90) ein Regulierelement (70; 90) umfassen, das selektiv zwischen einer Vielzahl alternativer Regulierpositionen (72) bewegt werden kann, und das Regulierelement (70; 90) funktional verbunden oder integral ausgebildet ist mit
- der Kappe (30),
- dem Reinigungsteil (40; 43), oder/und
- einem weiteren Teil (21), das zu den Reguliereinrichtungen gehört.

3. Vorrichtung nach Anspruch 1 oder 2, wobei die Manövriereinrichtungen (30; 40) umfassen:
- die Kappe (30),
- das Reinigungsteil (40; 43), oder/und
- ein weiteres Teil (21), das zu den Reguliereinrichtungen gehört,
wobei insbesondere:
- der Haltekörper (2) eine Vielzahl von Bezugselementen (72) aufweist, die jeweilige mögliche Winkelpositionen der Kappe (30), des Reinigungsteiles (40; 43) oder/und des weiteren Teils (21) anzeigen, denen die Regulierpositionen des Regulierelementes (70; 90) entsprechen, und/oder
- die Kappe (30), das Reinigungsteil (40; 43) oder/und das weitere Teil (21) eine Positions-Bezugseinrichtung (71; 31 a) hat/haben.

4. Vorrichtung nach Anspruch 2, wobei die Reguliereinrichtungen (60, 70, BP; 60, 70; 90) und die Manövriereinrichtungen (30; 40) so eingerichtet sind, dass:
- eine Bewegung, in die die Kappe (30), das Reinigungsteil (40; 43) oder das weitere Teil (21) versetzt werden, eine Verschiebung des Regulierelementes (70; 90) zwischen wenigstens zwei der Regulierpositionen verursacht.

5. Vorrichtung nach Anspruch 2, wobei das Reinigungsteil (40; 43) oder/und das weitere Teil (21) funktional mit dem Körper der Kappe (30) verbunden oder integral damit ausgebildet ist/sind.

6. Vorrichtung nach Anspruch 2, wobei
- das Reinigungsteil (40; 43) oder/oder das weitere Teil (21) als eine von der Kappe (30) getrennte Komponente eingerichtet ist/sind,
- die Kappe (30) so gekoppelt oder eingerichtet ist, dass sie mit dem Reinigungsteil (40; 43) oder dem weiteren Teil (21) so gekoppelt wird oder zusammenwirkt, dass eine Bewegung, in die die Kappe (30) manuell versetzt wird, eine Bewegung des Reinigungsteiles (40; 43) und/oder des weiteren Teils (21) und damit Bewegung des Regulierelementes (70) zwischen den zwei Regulierpositionen (72) bewirkt.

7. Vorrichtung nach Anspruch 2, wobei die Reguliereinrichtungen (60, 70, BP; 60, 70; 90) eine Umgehungsleitung (BP) mit einem Einlass stromauf von dem Durchflussregler (20) und einem Auslass stromab von dem Durchflussregler (20) sowie stromauf von der Auslassöffnung (9) umfassen und die Umgehungsleitung (BP) so eingerichtet ist, dass
- in einer ersten der Regulierpositionen das Regulierelement (70) einen Durchlassabschnitt (62) der Umgehungsleitung (BP) vollständig blockiert oder in einem ersten Maß blockiert, und
- in einer zweiten der Regulierpositionen das Regulierelement (70) den Durchlassabschnitt (62) der Durchlassleitung (BP) nicht blockiert oder in einem anderen Maß blockiert als in der ersten Regulierposition.

8. Vorrichtung nach Anspruch 7, wobei
- die Reguliereinrichtungen (20, 60, 70, BP; 20, 60, 70; 90) einen Hohlkörper (60) umfassen, der in die Kammer (7) einsetzt ist, der Hohlkörper (60) den Durchflussregler (20) wenigstens teilweise aufnimmt oder Teil des Durchflussreglers (20) ist, und
- der Hohlkörper (60) eine Wand (61, 64) hat, die wenigstens teilweise die Umgehungsleitung (BP), insbesondere den Einlass (62), derselben bildet.

9. Vorrichtung nach Anspruch 8, wobei
- zwischen einer Wand (61, 64) des Hohlkörpers (60) und der Wand des Haltekörpers (2), die die Kammer (7) begrenzen, eine Dichtungseinrichtung (66), vorzugsweise stromauf von einem Einlass (62) der Umgehungsleitung (BP) wirkt, die einen vorstehenden Teil bzw. eine Kante (66) der Wand (61, 64) des Hohlkörpers (60) umfasst, der/die an der Wand des Haltekörpers (2) anliegt, die die Kammer (7) begrenzt und/oder
- der Hohlkörper (60) und der Haltekörper (2) Einrichtungen (67) für gegenseitigen Ehgriff aufweisen, die so eingerichtet sind, dass sie Einführen des Hohlkörpers (60) an eine vorgegebene Position innerhalb der Kammer (7) zulassen und/oder Aufrechterhaltung einer vorgegebenen Position durch den Hohlkörper (60) in der Kammer (7) gewährleisten und/oder
- der Hohlkörper (60) einen Positionier- oder Abdichtsitz (65) für einen Abschnitt (42) des Reinigungsteiles (40) aufweist, wobei der Positioniersitz insbesondere einen Absatz oder ein vorstehendes Element (65) der Wand (61, 64) des Hohlkörpers (60) umfasst, der/das mit einer Fläche des Reinigungsteils (40) gekoppelt ist.

10. Vorrichtung nach Anspruch 2, wobei das Regulierelement (70; 90) verschoben werden kann, um wenigstens eine Funktionscharakteristik des Durchflussreglers (20) zu modifizieren, die ausgewählt wird aus:
- dem Abstand zwischen wenigstens einem Abschnitt des Drosselelementes (28) und dem Auslassabschnitt (24-27) des Durchflussreglers (20),
- der Größe oder dem Querschnitt des Durchlassspalts,
- einer Elastizitäts- oder Federeigenschaft einer Komponente (28) des Durchflussreglers (20).

11. Vorrichtung nach Anspruch 10, wobei das Drosselelement umfasst:
- einen elastisch verformbaren Körper (28), wobei das Regulierelement (70; 90) so eingerichtet ist, dass es eine Verformung oder Bewegung des elastisch verformbaren Körpers (28) vorzugsweise in einer im Wesentlichen axialen Richtung der Kammer (7) bewirkt, wobei das Ausmaß der Verformung bzw. Bewegung selektiv in Abhängigkeit von der Regulierposition (72) des Regulierelementes (70; 90) geändert werden kann, oder
- einen wenigstens teilweise starren Körper, auf den ein elastisches Element bzw. eine Feder, vorzugsweise in einer Richtung entgegengesetzt zu der des Flüssigkeitsstroms, wirkt, wobei das Regulierelement selektiv verschoben werden kann, um eine Änderung der Elastizitäts- bzw. Federeigenschaften des elastischen Elementes bzw. der Feder oder der Position derselben zu bewirken.

12. Vorrichtung nach Anspruch 4, wobei die Einrichtungen (7b, 31 b, 56; 80, 81) zum gegenseitigen Koppeln so eingerichtet ist, dass in dem Eingriffszustand die Kappe (30) nicht aus der Zugangsmündung (7a) herausgezogen werden kann, sondern die Kappe (30) in Bewegung versetzt werden kann.

13. Vorrichtung nach Anspruch 1 oder 12, wobei die Einrichtungen (7b, 31b, 56; 80, 81) zum gegenseitigen Koppeln so eingerichtet ist, dass die Kappe (30) in Bezug auf eine erste vordefinierte Position, von der ausgehend der Eingriffszustand der Einrichtungen (7b, 31 b, 56; 80, 81) zum gegenseitigen Koppeln hergestellt wird, um eine zusätzliche Strecke (81d) bewegt werden kann, und eine Bewegung, in die die Kappe (30) innerhalb der zusätzlichen Strecke (81 d) manuell versetzt wird, eine Bewegung des Regulierelementes (70; 90) zwischen den wenigstens zwei Regulierpositionen (72) bewirkt.

14. Vorrichtung nach wenigstens einem der vorangehenden Ansprüche, die des Weiteren eine oder mehr zusätzliche Funktionseinheit/en umfasst, die in Fluidverbindung mit der Einlassöffnung (8) oder/und der Auslassöffnung (9) des Haltekörpers (2), steht/stehen.

15. Vorrichtung nach Anspruch 14, wobei die zusätzliche/n Einheit/en aus einer Durchfluss-Messvorrichtung (6, 53-55), einer Wasserfluss-Weiche oder einem Durchflussmesser (110), einem Verbindungsteil (5), einem Zapfventil (100, 100') und einem unidirektionalen Ventil ausgewählt wird/werden.

## Revendications

1. Dispositif pour traiter un écoulement de liquide pour des appareils et des systèmes alimentés avec ledit liquide, comprenant :
un corps de support (2) inséré, dans lequel on trouve des moyens pour traiter l'écoulement de liquide (40, 43), le corps de support (2) définissant une chambre (7) ayant une ouverture d'entrée (8) pour l'écoulement de liquide à traiter, une ouverture de sortie (9) pour l'écoulement du liquide traité, et une embouchure d'accès (7a) à travers laquelle les moyens pour traiter l'écoulement de liquide (40, 43) peuvent être insérés dans la chambre (7), les moyens de traitement comprenant au moins un élément de purification (40 ; 43), en particulier un filtre (40), logé dans la chambre (7) dans une position intermédiaire entre l'ouverture d'entrée (8) et l'ouverture de sortie (9),
un capuchon (30) ayant un corps avec une partie pouvant être actionnée par un utilisateur (31a) et une partie d'étanchéité (32) adaptée pour fonctionner d'une manière étanche au liquide par rapport à l'embouchure d'accès (7a), l'élément de purification (40 ; 43) se trouvant dans la chambre (7) sous le capuchon (30),
dans lequel le corps de support (2) et le capuchon (30) ont des moyens de couplage mutuel (7b, 31b, 56 ; 80, 81) configurés pour maintenir, dans leur condition de mise en prise, le capuchon (30) dans une position de fermeture étanche de l'embouchure d'accès (7a), les moyens de couplage (7b, 31b, 56 ; 80, 81) étant susceptibles d'acquérir une condition de libération, dans laquelle le capuchon (30) peut être retiré de l'embouchure d'accès (7a), pour permettre le retrait de l'élément de purification (40 ; 43) de la chambre (7), et dans lequel, dans la chambre (7) du corps de support (2), on agence également un régulateur d'écoulement (20) en aval de l'élément de purification (40 ; 43) et en amont de l'ouverture de sortie (9), le régulateur d'écoulement (20) ayant un élément de limitation (28) et une section de sortie (24-27) définissant entre eux un espace de passage pour l'écoulement de liquide, l'élément de limitation (28) étant une membrane déformable ou mobile sous l'action de l'écoulement du liquide,
**caractérisé en ce que** les moyens d'ajustement (60, 70, BP ; 60, 70 ; 90) sont en outre prévus dans la chambre (7), pour prédéfinir ou ajuster sélectivement le débit autorisé au niveau de l'ouverture de sortie (9), les moyens d'ajustement (60, 70, BP ; 60, 70 ; 90) étant pré-agencés pour acquérir sélectivement deux configurations opérationnelles alternées ou plus du régulateur de flux, et **en ce que** le dispositif (1) comprend en outre des moyens de manoeuvre, pouvant être actionnés par un utilisateur afin de sélectionner une configuration opérationnelle souhaitée des moyens d'ajustement (60, 70, BP ; 60, 70 ; 90) parmi les configurations opérationnelles alternatives mentionnées ci-dessus.

2. Dispositif selon la revendication 1, dans lequel les moyens d'ajustement (60, 70, BP ; 60, 70 ; 90) comprennent un élément d'ajustement (70 ; 90) sélectivement mobile entre une pluralité de positions d'ajustement alternatives (72), l'élément d'ajustement (70 ; 90) étant associé de manière opérationnelle à et réalisé de manière solidaire avec au moins l'un parmi :
le capuchon (30),
l'élément de purification (40 ; 43), et
un élément supplémentaire (21) appartenant aux moyens d'ajustement.

3. Dispositif selon la revendication 1 ou 2, dans lequel les moyens de manoeuvre (30 ; 40) comprennent au moins l'un parmi :
le capuchon (30),
l'élément de purification (40 ; 43), et
un élément supplémentaire (21) appartenant aux moyens d'ajustement,
dans lequel en particulier :
le corps de support (2) a une pluralité d'éléments de référence (72) indiquant les positions angulaires respectives possibles d'au moins l'un parmi le capuchon (30), l'élément de purification (40 ; 43) et ledit élément supplémentaire (21), auquel les positions d'ajustement de l'élément d'ajustement (70 ; 90) correspondent, et/ou
au moins l'un parmi le capuchon (30), l'élément de purification (40 ; 43) et l'élément supplémentaire (21) a des moyens de référence de position (71 ; 31a).

4. Dispositif selon la revendication 2, dans lequel les moyens d'ajustement (60, 70, BP ; 60, 70 ; 90) et les moyens de manoeuvre (30 ; 40) sont configurés de sorte que :
un mouvement communiqué à l'un parmi le capuchon (30), l'élément de purification (40 ; 43) et ledit élément supplémentaire (21) provoque un déplacement de l'élément d'ajustement (70 ; 90) entre au moins deux desdites positions d'ajustement.

5. Dispositif selon la revendication 2, dans lequel au moins l'un parmi l'élément de purification (40 ; 43) et ledit élément supplémentaire (21) est associé de manière opérationnelle à ou est rendu solidaire du corps d'un capuchon (30).

6. Dispositif selon la revendication 2, dans lequel :
au moins l'un parmi l'élément de purification (40 ; 43) et ledit élément supplémentaire (21) est configuré en tant que composant séparé du capuchon (30),
le capuchon (30) est couplé ou pré-agencé pour être couplé ou coopérer avec l'élément de purification (40 ; 43) ou ledit élément supplémentaire (21) de sorte qu'un mouvement communiqué manuellement au capuchon (30) provoque un mouvement de l'élément de purification (40 ; 43) et/ou dudit élément supplémentaire (21), et ainsi un mouvement de l'élément d'ajustement (70) entre deux desdites positions d'ajustement (72).

7. Dispositif selon la revendication 2, dans lequel les moyens d'ajustement (60, 70, BP ; 60, 70 ; 90) comprennent un conduit de dérivation (BP) ayant une entrée en amont du régulateur d'écoulement (20), et une sortie en aval du régulateur d'écoulement (20) et en amont de l'ouverture de sortie (9), le conduit de dérivation (BP) étant configuré de sorte que :
dans une première desdites positions d'ajustement, l'élément d'ajustement (70) obstrue complètement ou obstrue jusqu'à une première étendue, une section de passage (62) du conduit de dérivation (BP), et
dans une deuxième desdites positions d'ajustement, l'élément d'ajustement (70) n'obstrue pas la section de passage (62) du conduit de dérivation (BP), ou l'obstrue jusqu'à une étendue différente par rapport à la première position d'ajustement.

8. Dispositif selon la revendication 7, dans lequel :
les moyens d'ajustement (20, 60, 70, BP ; 20, 60, 70 ; 90) comprennent un corps creux (60) qui est inséré dans la chambre (7), le corps creux (60) logeant au moins partiellement le régulateur d'écoulement (20) ou faisant partie du régulateur d'écoulement (20),
le corps creux (60) a une paroi (61, 64) qui définit au moins partiellement le conduit de dérivation (BP), en particulier son entrée (62).

9. Dispositif selon la revendication 8, dans lequel :
entre une paroi (61, 64) du corps creux (60) et la paroi du corps de support (2) délimitant la chambre (7), les moyens d'étanchéité (66) sont opérationnels, de préférence opérationnels en amont d'une entrée (62) du conduit de dérivation (BP) et comprenant une partie ou bord en saillie (66) de ladite paroi (61, 64) du corps creux (60) venant en butée contre la paroi du corps de support (2) délimitant la chambre (7), et/ou
le corps creux (60) et le corps de support (2) ont des moyens de mise en prise mutuelle (67) configurés pour permettre l'insertion du corps creux (60) dans une position prédéterminée à l'intérieur de la chambre (7) et/ou pour garantir le maintien d'une position prédéterminée par le corps creux (60) dans la chambre (7), et/ou
le corps creux (60) définit un siège de positionnement ou d'étanchéité (65) pour une partie (42) de l'élément de purification (40), le siège de positionnement comprenant en particulier un échelon ou un élément en saillie (65) de ladite paroi (61, 64) du corps creux (60) qui se couple avec une surface de l'élément de purification (40).

10. Dispositif selon la revendication 2, dans lequel l'élément d'ajustement (70 ; 90) peut être déplacé pour modifier au moins une caractéristique opérationnelle du régulateur d'écoulement (20) choisie parmi :
la distance entre au moins une partie de l'élément de limitation (28) et la section de sortie (24-27) du régulateur d'écoulement (20),
la taille ou section dudit espace de passage,
une caractéristique élastique ou de résilience d'un composant (28) du régulateur d'écoulement (20).

11. Dispositif selon la revendication 10, dans lequel l'élément de limitation comprend l'un parmi :
un corps élastiquement déformable (28) et l'élément d'ajustement (70 ; 90) est pré-agencé pour provoquer une déformation ou mouvement du corps élastiquement déformable (28), de préférence dans une direction sensiblement axiale de la chambre (7), l'étendue de la déformation ou du mouvement étant sélectivement variable en fonction de la position d'ajustement (72) de l'élément d'ajustement (70 ; 90),
un corps au moins partiellement rigide sur lequel un élément élastique ou ressort fonctionne, de préférence dans une direction opposée à celle de l'écoulement de liquide, et l'élément d'ajustement peut être déplacé sélectivement pour provoquer une variation de la caractéristique élastique ou de résilience dudit élément élastique ou ressort ou de sa position.

12. Dispositif selon la revendication 4, dans lequel les moyens de couplage mutuel (7b, 31b, 56 ; 80, 81) sont configurés de sorte que, dans ladite condition de mise en prise, le capuchon (30) ne peut pas être extrait de l'embouchure d'accès (7a) mais un mouvement peut être communiqué au capuchon (30).

13. Dispositif selon la revendication 1 ou 12, dans lequel les moyens de couplage mutuel (7b, 31b, 56 ; 80, 81) sont configurés de sorte qu'un déplacement supplémentaire (81d) peut être communiqué au capuchon (30), par rapport à sa première position prédéfinie commençant à partir du moment où ladite condition de mise en prise des moyens de couplage mutuel (7b, 31b, 56 ; 80, 81) est atteinte, et dans lequel un mouvement communiqué manuellement au capuchon (30) dans ledit déplacement supplémentaire (81d) provoque un mouvement de l'élément d'ajustement (70 ; 90) entre au moins deux desdites positions d'ajustement (72).

14. Dispositif selon au moins l'une des revendications précédentes, comprenant en outre une ou plusieurs unités fonctionnelles supplémentaires en communication de fluide avec au moins l'une parmi l'ouverture d'entrée (8) et l'ouverture de sortie (9) du corps de support (2).

15. Dispositif selon la revendication 14, dans lequel ladite unité ou lesdites unités supplémentaire(s) est/sont choisie(s) parmi un dispositif de mesure d'écoulement (6, 53-55), un commutateur d'écoulement d'eau ou débitmètre (110), un raccord (5), un robinet (100, 100'), une soupape unidirectionnelle.
